(19) Europäisches Patentamt / European Patent Office / Office européen des brevets

(11) **EP 4 530 811 A1**

(12) **EUROPEAN PATENT APPLICATION**

(43) Date of publication:
02.04.2025 Bulletin 2025/14

(21) Application number: 24202726.6

(22) Date of filing: 26.09.2024

(51) International Patent Classification (IPC):
*G06F 3/0485* (2022.01)   *G06F 3/04845* (2022.01)
*G06F 3/04883* (2022.01)

(52) Cooperative Patent Classification (CPC):
**G06F 3/04845; G06F 3/04815; G06F 3/0485;
G06F 3/04883;** G06F 2203/04806

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.09.2023 JP 2023170587
29.03.2024 JP 2024055180

(71) Applicant: **Ricoh Company, Ltd.**
**Tokyo 143-8555 (JP)**

(72) Inventors:
• **Hasegawa, Takashi**
**Tokyo 143-8555 (JP)**
• **Horiuchi, Takeshi**
**Tokyo 143-8555 (JP)**
• **Hinohara, Hiroshi**
**Tokyo 143-8555 (JP)**
• **Homma, Takeshi**
**Tokyo 143-8555 (JP)**

(74) Representative: **Marks & Clerk LLP**
**15 Fetter Lane**
**London EC4A 1BW (GB)**

Remarks:
The application is published incomplete as filed
(Rule 68(1) EPC).

(54) **DISPLAY TERMINAL, SYSTEM, DISPLAY METHOD, AND CARRIER MEANS**

(57)   A display terminal (7, 9) includes a display (507) to display a screen including a predetermined-area image representing a viewable area of a wide-view image, and a display control unit (74, 94) configured to control the display. In response to detection of a first operation on the predetermined-area image, the display control unit (74, 94) performs first processing of displaying another predetermined-area image representing another viewable area of the wide-view image, said another viewable area reflecting a change in virtual viewpoint to the wide-view image. In response to detection of a second operation on the predetermined-area image, the second operation being different than the first operation, the display control unit (74, 94) performs second processing of scrolling the predetermined-area image in the screen.

FIG. 13

EP 4 530 811 A1

## Description

BACKGROUND

Technical Field

The present disclosure relates to a display terminal, a system, a display method, and carrier means.

Related Art

For an image not entirely displayed on a screen, a user viewing the image (viewer) may move a scroll bar or drag a part of the image on the screen to scroll the image, so that the other part of the image is displayed on the screen.

For example, when displaying multiple images on multiple windows on the screen, the viewer tends to scroll the image since each image is displayed in a smaller size (see Japanese Unexamined Patent Application Publication No. 2022-074159).

On the other hand, if the image being displayed is a wide-view image such as a spherical image, the object in the image may appear curved, making it difficult for the viewer to recognize. In view of this, a predetermined-area image, which is a part of the wide-view image that is set as a viewable area for the viewer, is displayed on the screen. The viewer performs an operation such as dragging on the predetermined-area image on the screen to change the virtual viewpoint in the wide-view image, and display another predetermined-area image that is a part of the wide-view image corresponding to the virtual viewpoint being changed.

In such cases, one operation such as dragging is used to scroll the image as well as to change the virtual viewpoint of the image, causing a conflict.

SUMMARY

Example embodiments include a display terminal including a display to display a screen including a predetermined-area image representing a viewable area of a wide-view image, and a display control unit configured to control the display. In response to detection of a first operation on the predetermined-area image, the display control unit performs first processing of displaying another predetermined-area image representing another viewable area of the wide-view image, said another viewable area reflecting a change in virtual viewpoint to the wide-view image. In response to detection of a second operation on the predetermined-area image, the second operation being different than the first operation, the display control unit performs second processing of scrolling the predetermined-area image in the screen.

Example embodiments include a system including: a display to display a screen including a predetermined-area image representing a viewable area of a wide-view image; and a communication terminal communicably connected with the display, including: a display control unit configured to control the display. In response to detection of a first operation on the predetermined-area image, the display control unit performs first processing of displaying another predetermined-area image representing another viewable area of the wide-view image, said another viewable area reflecting a change in virtual viewpoint to the wide-view image, and in response to detection of a second operation on the predetermined-area image, the second operation being different than the first operation, the display control unit performs second processing of scrolling the predetermined-area image in the screen.

Example embodiments include a method of displaying, comprising: displaying, on a display, a screen including a predetermined-area image representing a viewable area of a wide-view image; in response to detection of a first operation on the predetermined-area image, performing first processing of displaying another predetermined-area image representing another viewable area of the wide-view image, said another viewable area reflecting a change in virtual viewpoint to the wide-view image; and in response to detection of a second operation on the predetermined-area image, the second operation being different than the first operation, performing second processing of scrolling the predetermined-area image in the screen.

Example embodiments include a carrier means carrying computer readable code for controlling a computer system to carry out the above-described method.

With the above-described configuration, even when one or more images being displayed on the screen include a predetermined-area image, which is a part of the wide-view image, the operation used for scrolling the image and the operation used for changing the virtual viewpoint in the image can be distinguished from each other.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIGs. 1A, 1B, and 1C are a left side view, a front view, and a plan view of an image capturing apparatus, respectively;

FIG. 2 is an illustration for explaining how a user uses the image capturing apparatus;

FIGs. 3A and 3B are views illustrating a hemispherical image (front side) and a hemispherical image (back side) captured by the image capturing apparatus, respectively; FIG. 3C is a view illustrating an example of an image represented by Mercator projection;

FIG. 4A is a conceptual diagram illustrating an example of how a Mercator image is mapped to a sphere;

FIG. 4B is a view illustrating an example spherical image;

FIG. 5 is a view illustrating positions of a virtual camera and a predetermined area in a case where the spherical image is of a three-dimensional sphere;

FIG. 6A is a perspective view of the virtual camera and the predetermined area illustrated in FIG. 5; FIG. 6B is a view illustrating a predetermined-area image obtained in the state illustrated in FIG. 6A and displayed on a display; FIG. 6C is a view of a predetermined area obtained by changing the viewpoint of the virtual camera illustrated in FIG. 6A; FIG. 6D is a view illustrating a predetermined-area image obtained in the state illustrated in FIG. 6C and displayed on the display;

FIG. 7 is a view illustrating a point in a three-dimensional Euclidean space defined in spherical coordinates;

FIG. 8 is a conceptual diagram illustrating a relationship between the predetermined area and a point of interest;

FIG. 9 is a schematic diagram illustrating a communication system including the image capturing apparatus;

FIG. 10 is a block diagram illustrating an example hardware configuration of the image capturing apparatus;

FIG. 11 is a block diagram illustrating an example hardware configuration of a relay device in the communication system;

FIG. 12 is a block diagram illustrating an example hardware configuration of a communication processing system and a communication terminal in the communication system;

FIG. 13 is a block diagram illustrating an example functional configuration of the communication system;

FIG. 14 is a table illustrating an example of a user/-device management database (DB);

FIG. 15 is a table illustrating an example of a virtual room management DB;

FIG. 16 is a table illustrating an example of a viewpoint management DB;

FIG. 17 is a sequence diagram illustrating an example communicating process of a wide-view image and viewpoint information, performed by the communication system;

FIG. 18 is a sequence diagram illustrating an example communicating process of a planar image and shared image data, performed by the communication system;

FIG. 19 is a flowchart illustrating example processing to display according to mouse operation on the predetermined-area image or outside the predetermined-area image, in the example case where the communication terminal is a personal computer (PC);

FIG. 20 is a diagram illustrating an example home screen displayed by an application installed in the communication terminal;

FIG. 21 is a diagram illustrating a predetermined-area image displayed by the application, which is changed by moving a virtual viewpoint in the wide-view image according to a drag operation performed on the predetermined-area image;

FIG. 22 is a diagram illustrating a predetermined-area image, which is scrolled according to a scroll wheel operation performed on the predetermined-area image illustrated in FIG. 21;

FIG. 23 is a diagram illustrating an example home screen displayed by a Web browser installed in the communication terminal;

FIG. 24 is a diagram illustrating a predetermined-area image displayed by the Web browser, which is changed by moving a virtual viewpoint in the wide-view image according to a drag operation performed on the predetermined-area image;

FIG. 25 is a diagram illustrating a predetermined-area image, which is scrolled according to a scroll wheel operation performed on the predetermined-area image illustrated in FIG. 24;

FIG. 26 is a flowchart illustrating a displaying process according to operation, using the finger or fingers of the operator, on the predetermined-area image or outside the predetermined-area image, in the example case where the communication terminal is the portable terminal;

FIG. 27 is a view illustrating another example home screen displayed by a display terminal; and

FIG. 28 is a diagram illustrating a screen where the predetermined-area image and the shared screen data image are switched according to selection of an arrow icon in the predetermined-area image displayed in the home screen of FIG. 27.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Overview of Spherical Image

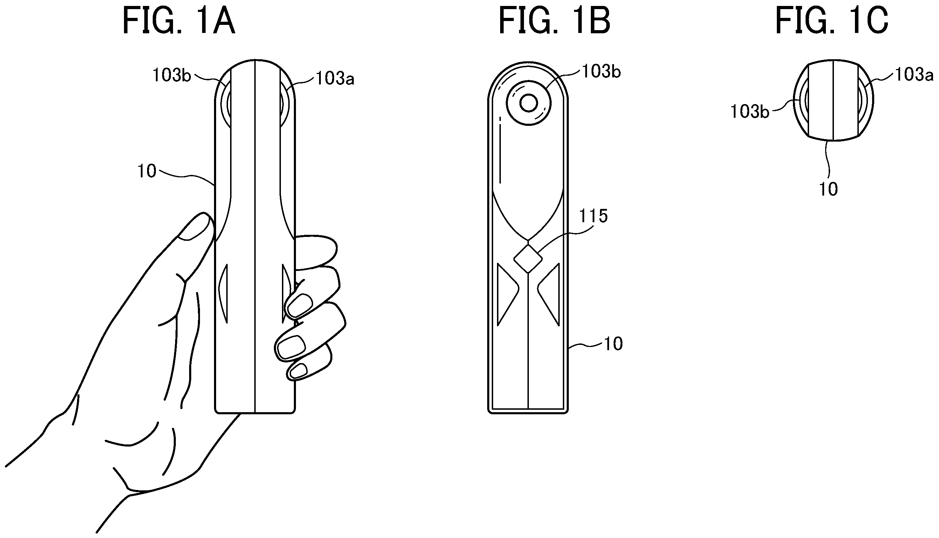

An example method for generating a spherical image is described with reference to FIGs. 1A to 8. The spherical image, which may be referred to as a spherical panoramic image or a 360-degree panoramic image, is an example of a wide-view moving image having a wide range of viewing angles. Examples of the wide-view image also include a panoramic image of about 180 degrees.

An external view of an image capturing apparatus 10 is described below with reference to FIGs. 1A to 1C. The image capturing apparatus 10 is a digital camera, which captures images from which a spherical image is generated. FIGs. 1A, 1B, and 1C are a left side view, a front view, and a plan view of the image capturing apparatus 10, respectively.

As illustrated in FIG. 1A, the image capturing apparatus 10 has a size such that a person can hold the image capturing apparatus 10 with one hand. As illustrated in FIGs. 1A, 1B, and 1C, the image capturing apparatus 10 includes an imaging element 103a and an imaging element 103b in an upper portion thereof. Specifically, the imaging element 103a is disposed on the front side, and the imaging element 103b is disposed on the back side. As illustrated in FIG. 1B, the image capturing apparatus 10 further includes an operation unit 115 such as a shutter button on the back side of the image capturing apparatus 10.

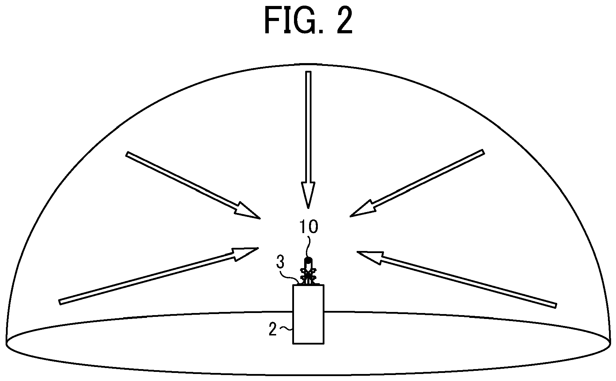

A description is given of the usage of the image capturing apparatus 10 with reference to FIG. 2. FIG. 2 is an illustration for explaining how a user uses the image capturing apparatus 10. As illustrated in FIG. 2, the image capturing apparatus 10 is communicably connected to a relay device 3, which may be placed on a table 2. The image capturing apparatus 10 is used to capture images of surrounding objects and scenery. The imaging elements 103a and 103b illustrated in FIGs. 1A and 1C capture objects surrounding the user to obtain two hemispherical images, from which the spherical image is generated. If the spherical image obtained by the image capturing apparatus 10 is not to be transmitted to other communication terminals or systems, the relay device 3 may be omitted.

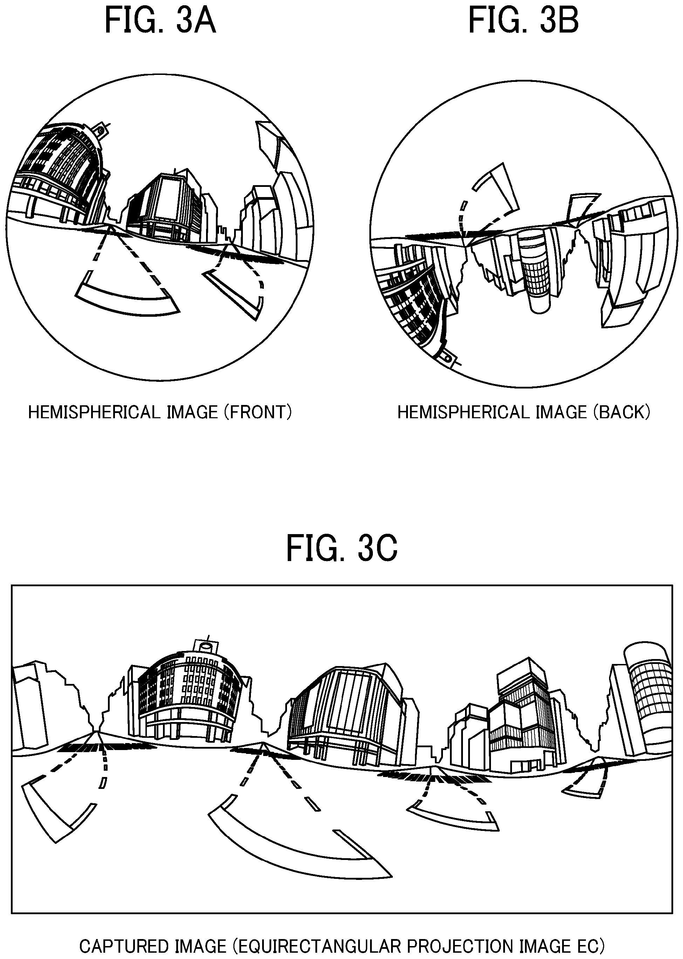

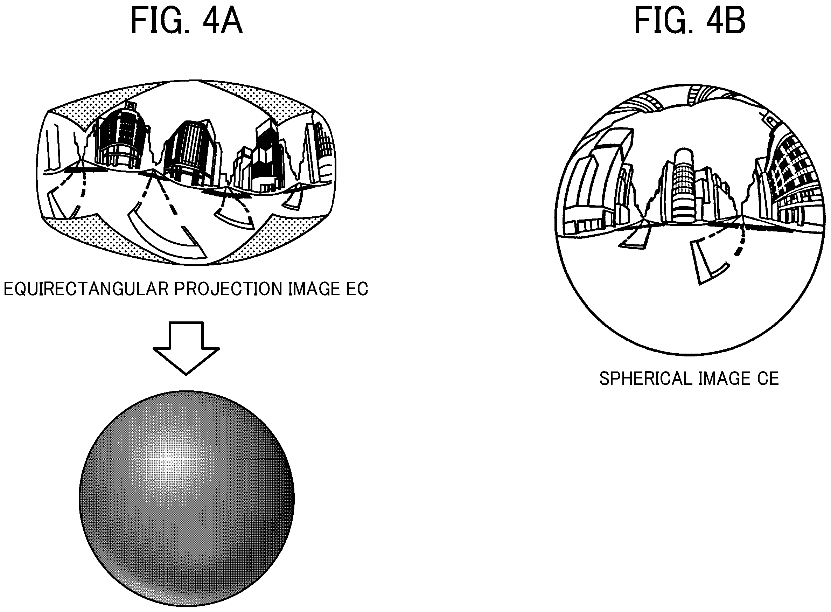

An overview of a process for generating the spherical image from the images captured by the image capturing apparatus 10 is described with reference to FIGs. 3A to 3C and FIGs. 4A and 4B. FIG. 3A illustrates a hemispherical image (front side) captured by the image capturing apparatus 10. FIG. 3B illustrates a hemispherical image (back side) captured by the image capturing apparatus 10. FIG. 3C illustrates an image in equirectangular projection, which may be referred to as an "equirectangular projection image". The equirectangular projection image may be an image represented by Mercator projection. The image represented by Mercator projection may be referred to as a "Mercator image". FIG. 4A is a conceptual diagram illustrating how the equirectangular projection image is mapped to the surface of a sphere. FIG. 4B is a view illustrating the spherical image. The term "equirectangular projection image" refers to the spherical image in equirectangular projection format, which is an example of the wide-view image described above.

As illustrated in FIG. 3A, an image obtained by the imaging element 103a is a curved hemispherical image (front side) captured through a wide-angle lens 102a such as a fisheye lens described below. As illustrated in FIG. 3B, an image obtained by the imaging element 103b is a curved hemispherical image (back side) captured through a wide-angle lens 102b such as a fisheye lens described below. The image capturing apparatus 10 combines the hemispherical image (front side) and the hemispherical image (back side), which are flipped 180 degrees, to generate the equirectangular projection image EC as illustrated in FIG. 3C.

The image capturing apparatus 10 uses software such as Open Graphics Library for Embedded Systems (OpenGL ES) to map the equirectangular projection image EC to the sphere so as to cover the surface of the sphere in a manner illustrated in FIG. 4A to generate the spherical image CE as illustrated in FIG. 4B. The spherical image CE is represented as the equirectangular projection image EC, which corresponds to a surface facing the center of the sphere. OpenGL ES is a graphics library used for visualizing two-dimensional (2D) data and three-dimensional (3D) data. OpenGL ES is an example of software for executing image processing. Any other software may be used to create the spherical image CE. The spherical image CE is either a still image or a moving image. In the foregoing description, the image capturing apparatus 10 performs image processing to generate the spherical image. Alternatively, similar image processing or some steps of the image processing may be executed by a communication processing system 5 or a communication terminal 7 or 9 described below.

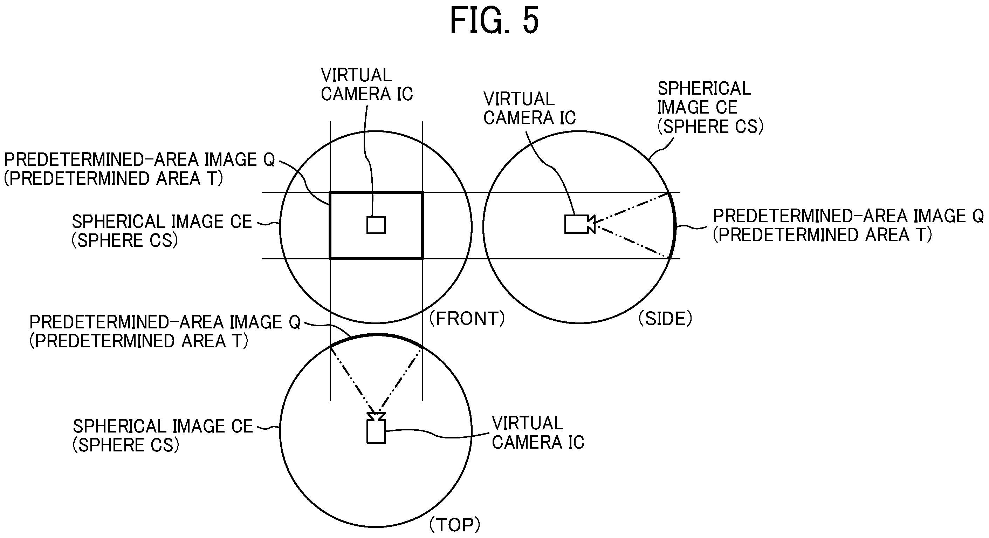

Since the spherical image CE is an image mapped onto the surface of the sphere to cover the surface of the sphere, a part of the image may look distorted when viewed by the user, providing a strange feeling. Accordingly, an image of a predetermined area, which is a part of the spherical image CE, is displayed as a less distorted planar image having fewer curves on the communication terminal 7 or 9 to make the user feel comfortable. The image of the predetermined area may be referred to as a "predetermined-area image". The display of the predetermined-area image is described with reference to FIGs. 5 to 8.

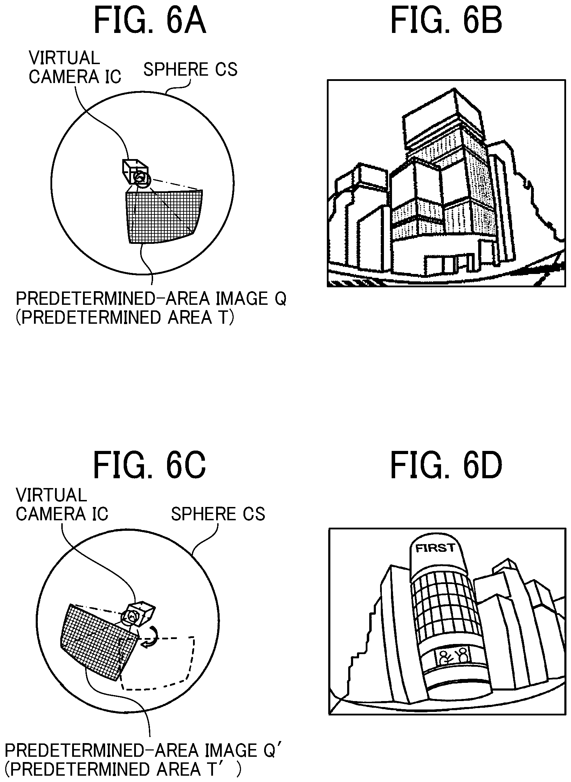

FIG. 5 is a view illustrating the position of a virtual camera IC and the position of a predetermined area T in a case where the spherical image CE is of a three-dimensional sphere CS. The position of the virtual camera IC corresponds to the position of a virtual viewpoint of the user who is viewing the spherical image CE represented as a surface area of the three-dimensional sphere CS. FIG. 6A is a perspective view of the virtual camera IC and the predetermined area T illustrated in FIG. 5. FIG. 6B illustrates a predetermined-area image obtained in the state illustrated in FIG. 6A and displayed on a display. FIG. 6C is a view illustrating a predetermined area obtained by changing the viewpoint of the virtual camera IC illustrated in FIG. 6A. FIG. 6D illustrates a predetermined-area image obtained in the state illustrated in FIG. 6C and displayed on the display.

Assuming that the spherical image CE having been generated is a surface area of the solid sphere CS, the virtual camera IC is inside of the spherical image CE as illustrated in FIG. 5. The predetermined area T in the spherical image CE is an imaging area of the virtual camera IC. Specifically, the predetermined area T is specified by angle-of-view information indicating an imaging direction and an angle of view of the virtual camera IC in a three-dimensional virtual space including the spherical image CE. The angle-of-view information may be referred to as "predetermined-area information".

Further, zooming in or out the predetermined area T may be performed through bringing the virtual camera IC closer to or away from the spherical image CE. In FIG. 6A, a predetermined-area image Q is an image of the predetermined area T in the spherical image CE. The predetermined area T is defined by an angle of view $\alpha$ and a distance f from the virtual camera IC to the spherical image CE.

In response to the shift or change of the viewpoint of the virtual camera IC to the right (i.e., to the left from the viewer's perspective) from the state illustrated in FIG. 6A, as illustrated in FIG. 6C, the predetermined area T in the spherical image CE is shifted to a predetermined area T'. Accordingly, the predetermined-area image Q displayed on a display is changed to a predetermined-area image Q'. As a result, the image displayed on the display changes from the image illustrated in FIG. 6B to the image illustrated in FIG. 6D.

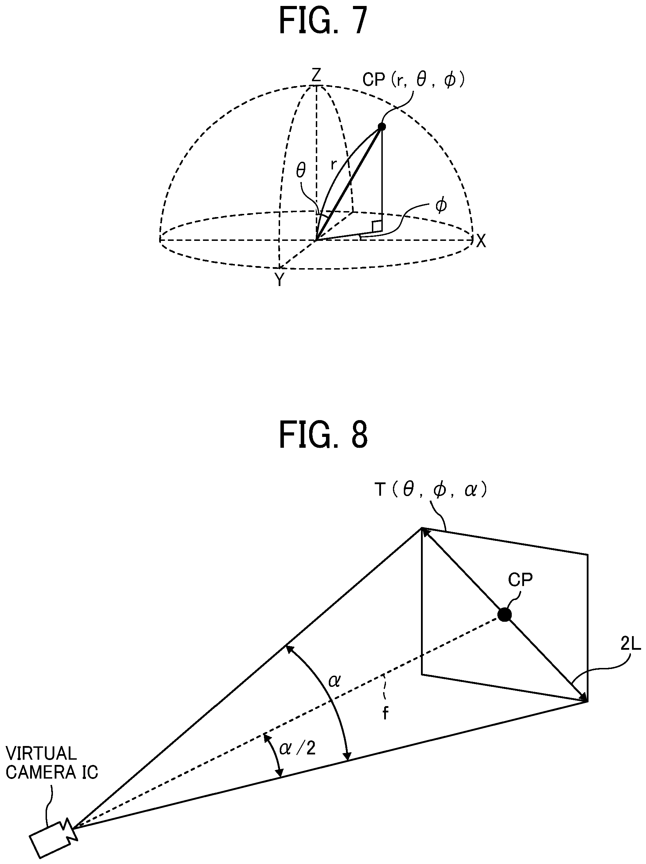

The relationship between the angle-of-view information and the image of the predetermined area T is described with reference to FIGs. 7 and 8.

FIG. 7 illustrates a point in a three-dimensional Euclidean space defined in spherical coordinates. FIG. 8 schematically illustrates a relationship between the predetermined area T and a point of interest (center point CP).

The center point CP illustrated in FIG. 7 is represented by a spherical polar coordinate system to obtain position coordinates $(r, \theta, \varphi)$. The position coordinates $(r, \theta, \varphi)$ represent a radius vector, a polar angle, and an azimuth angle, respectively. The radius vector r is a distance from the origin of the three-dimensional virtual space including the spherical image CE to any point, such as the center point CP in FIG. 8. The radius vector r is equal to a distance f illustrated in FIG. 8.

As illustrated in FIG. 8, when the center of the predetermined area T, which is the imaging area of the virtual camera IC, is considered as the center point CP illustrated in FIG. 7, a trigonometric function typically expressed by Equation 1 below is satisfied.

$$(L/f) = \tan (\alpha/2) \text{ (Equation 1)}$$

In Equation 1, f denotes the distance from the virtual camera IC to the center point CP. L denotes the distance between the center point CP and a given vertex of the predetermined area T, while 2L is a diagonal line. $\alpha$ denotes the angle of view. In this case, the angle-of-view information for specifying the predetermined area T may be represented by pan ($\theta$), tilt ($\varphi$), and field of view (fov) ($\alpha$) values. Zooming in or out the predetermined area T may be determined by increasing or decreasing the range (arc) of the angle of view $\alpha$.

Overview of Communication System

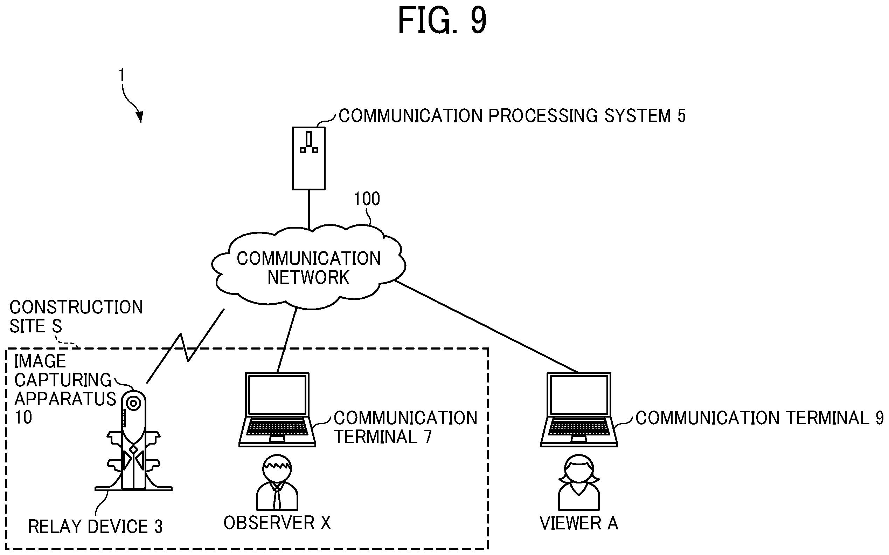

An overview of the communication system 1 is described with reference to FIG. 9. FIG. 9 is a schematic diagram illustrating a configuration of the communication system 1.

As illustrated in FIG. 9, the communication system 1 includes the image capturing apparatus 10, the relay device 3, the communication terminal 7, and the communication terminal 9. The communication terminal 7 and the communication terminal 9 hold a remote conference via a communication network 100. When there is more than one site, the communication terminal 9 may be used at each of the sites. The communication terminal 7 and the communication terminal 9 may each be referred to as a "display terminal" that displays images.

The image capturing apparatus 10 is the digital camera, which obtains the spherical image as described above. Since the communication terminal 7 and the communication terminal 9 can hold the remote conference, the communication terminal 7 can transmit the spherical image obtained by the image capturing apparatus 10 to the communication terminal 9 at a remote location, which is a location other than the location where the communication terminal 7 resides. The relay device 3 is an example of a cradle, which charges electric power to the image capturing apparatus 10 and controls the transmission and reception of data to and from the image capturing apparatus 10. The relay device 3 performs data communication with the image capturing apparatus 10 via a contact point, and performs data communication with the communication processing system 5 via the communication network 100. Examples of the communication network 100 include the Internet, a local area network (LAN), and a wireless router.

The communication processing system 5 is, for example, a computer server, and performs data communication with the relay device 3 and the communication terminals 7 and 9 via the communication network 100.

The communication terminals 7 and 9 are, for example, notebook personal computers (PCs), and perform data communication with the communication processing system 5 via the communication network 100. Each of the communication terminals 7 and 9 is installed with OpenGL ES and generates a predetermined-area image (see FIGs. 6A to 6D) from the spherical image received from the communication processing system 5. The communication processing system 5 may be implemented by a single computer server or may be implemented by multiple computer servers.

Further, the image capturing apparatus 10 and the relay device 3 are placed at a predetermined location of a construction site S, by an observer X such as a worker. The communication terminal 7 is operated by the observer X. The communication terminal 9 is operated by a viewer A, who may be a construction manager or a construction supervisor at a remote site.

The communication processing system 5 transmits (distributes) the spherical image obtained from the image capturing apparatus 10 via the relay device 3 to the communication terminals 7 and 9. The communication processing system 5 receives, from the communication terminal 9, the viewpoint information for specifying a predetermined area in the predetermined-area image, which is displayed at the communication terminal 9 for viewing by the viewer A, and transmits the viewpoint information to the communication terminal 7. The communication terminal 7 displays a viewpoint display area based on the viewpoint information in the predetermined-area image, which is a predetermined area of the spherical image received from the communication processing system 5. This allows the viewer X to recognize which predetermined area of the spherical image the viewer A at the remote location is viewing.

Hardware Configurations

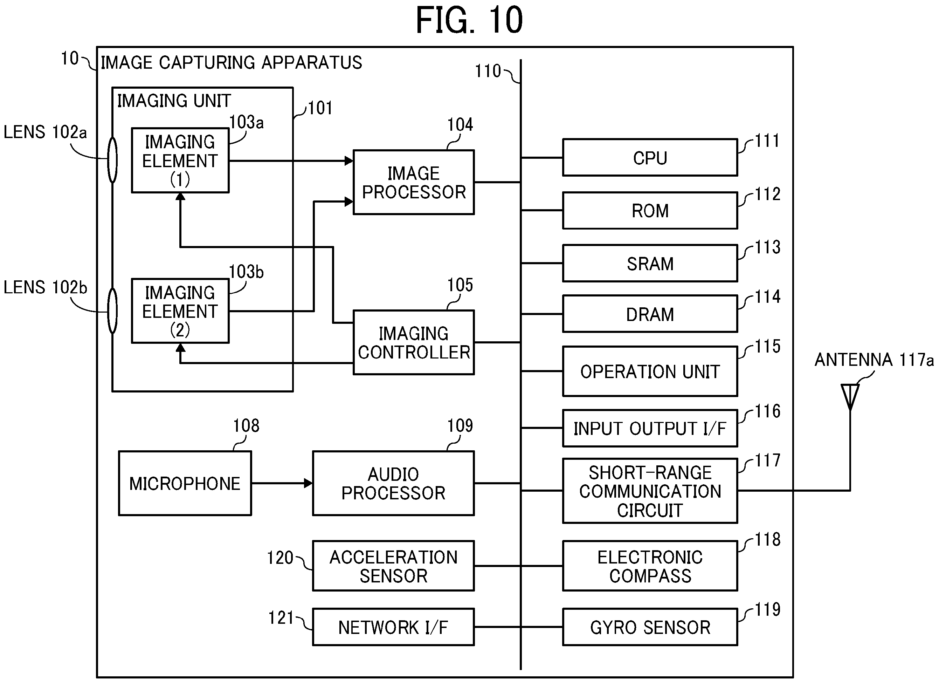

The hardware configurations of the image capturing apparatus 10, the relay device 3, and the communication terminals 7 and 9 are described below with reference to FIGs. 10 to 12.

Hardware Configuration of Image Capturing Apparatus

FIG. 10 is a diagram illustrating an example hardware configuration of the image capturing apparatus 10. As illustrated in FIG. 10, the image capturing apparatus 10 includes an imaging unit 101, an image processor 104, an imaging controller 105, a microphone 108, an audio processor 109, a central processing unit (CPU) 111, a read-only memory (ROM) 112, a static random access memory (SRAM) 113, a dynamic random access memory (DRAM) 114, an operation unit 115, an input/output interface (I/F) 116, a short-range communication circuit 117, an antenna 117a for the short-range communication circuit 117, an electronic compass 118, a gyro sensor 119, an acceleration sensor 120, and a network I/F 121.

The imaging unit 101 includes two wide-angle lenses 102a and 102b, each having an angle of view of equal to or greater than 180 degrees so as to form a hemispherical image. The wide-angle lenses 102a and 102b may be collectively referred to as the lens 102 unless they need to be distinguished from each other. The imaging unit 101 further includes two imaging elements 103a and 103b corresponding to the lenses 102a and 102b, respectively.

Each of the imaging elements 103a and 103b includes an image sensor such as a complementary metal oxide semiconductor (CMOS) sensor or a charge-coupled device (CCD) sensor, a timing generation circuit, and a group of registers. The image sensor converts an optical image formed by the lens 102a or 102b into an electrical signal and outputs image data. The timing generation circuit generates horizontal or vertical synchronization signals and pixel clocks for the image sensor. In the group of registers, data such as various commands and parameters are set for an operation of the imaging element 103a or 103b. As a non-limiting example, the imaging unit 101 includes two wide-angle lenses. The imaging unit 101 may include one wide-angle lens or three or more wide-angle lenses.

Each of the imaging elements 103a and 103b of the imaging unit 101 is connected to the image processor 104 via a parallel I/F bus. Each of the imaging elements 103a and 103b of the imaging unit 101 is further connected to the imaging controller 105 via a serial I/F bus such as an I2C bus.

The image processor 104, the imaging controller 105, and the audio processor 109 are connected to the CPU 111 via a bus 110. The ROM 112, the SRAM 113, the DRAM 114, the operation unit 115, the input/output I/F 116, the short-range communication circuit 117, the electronic compass 118, the gyro sensor 119, the acceleration sensor 120, and the network I/F 121 are also connected to the bus 110.

The image processor 104 acquires image data output from the imaging elements 103a and 103b via the parallel I/F buses and performs predetermined processing on the image data. The image processor 104 combines the processed image data to generate data of an equirectangular projection image (an example of a wide-view image) described below.

In this example, the imaging controller 105 operates as a master device while the imaging elements 103a and 103b each operate as a slave device. The imaging controller 105 sets commands in the group of registers included in each of the imaging elements 103a and 103b via the serial I/F bus such as the I2C bus. The imaging controller 105 receives the commands from the CPU 111. The imaging controller 105 further acquires status data of the group of registers of each of the imaging elements 103a and 103b via the I2C bus. The imaging controller 105 sends the obtained status data to the CPU 111.

The imaging controller 105 instructs the imaging elements 103a and 103b to output the image data at a time when a shutter button of the operation unit 115 is pressed. In some cases, the image capturing apparatus 10 displays, on the display, a preview image or a moving image. Examples of the display include, but are not limited to, a display of an external terminal such as a smartphone that performs short-range communication with the image capturing apparatus 10 through the short-range communication circuit 117. In the case of displaying the moving image, the image data are continuously output from the imaging elements 103a and 103b at a predetermined frame rate (frames per minute).

Furthermore, the imaging controller 105 operates in cooperation with the CPU 111 to synchronize the time when the imaging element 103a outputs image data and the time when the imaging element 103b outputs the image data. Although the image capturing apparatus 10 does not include the display in this example, the image capturing apparatus 10 may include the display. The microphone 108 converts sounds to audio data (signal).

The audio processor 109 acquires the audio data output from the microphone 108 via an I/F bus and performs predetermined processing on the audio data.

The CPU 111 controls the entire operation of the image capturing apparatus 10 and performs predetermined processing.

The ROM 112 stores various programs for execution by the CPU 111. Each of the SRAM 113 and the DRAM 114 operates as a work memory to store programs to be executed by the CPU 111 or data being currently processed by the CPU 111. More specifically, in one example, the DRAM 114 stores image data currently processed by the image processor 104 and data of the equirectangular projection image on which processing has been performed.

The operation unit 115 collectively refers to various operation keys, a power switch, a shutter button, and a touch panel having both the displaying and operating functions. The user operates the operation unit 115 to input various image capturing modes or image capturing conditions.

The input/output I/F 116 collectively refers to an interface circuit such as a universal serial bus (USB) I/F that allows the image capturing apparatus 10 to communicate with an external medium such as a Secure Digital (SD) card or an external personal computer. The input/output I/F 116 supports at least one of wired and wireless communications. The data of the equirectangular projection image, which is stored in the DRAM 114, is stored in the external medium via the input/output I/F 116 or transmitted to an external terminal (apparatus) via the input/output I/F 116, as needed.

The short-range communication circuit 117 communicates with the external terminal (apparatus) via the antenna 117a of the image capturing apparatus 10 by short-range wireless communication technologies such as near field communication (NFC), Bluetooth®, or Wi-Fi®. The short-range communication circuit 117 transmits the data of the equirectangular projection image to the external terminal (apparatus).

The electronic compass 118 calculates an orientation of the image capturing apparatus 10 from the Earth's magnetism and outputs the orientation information. The orientation information is an example of related information (metadata) in compliance with exchangeable image file format (Exif). The orientation information is used for image processing such as image correction of a captured image. The related information also includes data of the date and time when the image was captured, and data of the data size of image data.

The gyro sensor 119 detects a change in tilt (roll, pitch, and yaw) of the image capturing apparatus 10 with the movement of the image capturing apparatus 10. The change in tilt is another example of the related information (metadata) in compliance with Exif, which is used for image processing such as image correction of the captured image.

The acceleration sensor 120 detects acceleration of the image capturing apparatus 10 in three axial directions. The image capturing apparatus 10 calculates the position (an angle with respect to the direction of gravity) of the image capturing apparatus 10, based on the acceleration detected by the acceleration sensor 120. With the gyro sensor 119 and the acceleration sensor 120, the image capturing apparatus 10 can correct the image with high accuracy.

The network I/F 121 is an interface for performing data communication, via, for example, a router, using the communication network 100 such as the Internet. The hardware elements of the image capturing apparatus 10 are not limited to the ones illustrated in FIG. 10, and any other hardware elements are applicable as long as the functional configuration of the image capturing apparatus 10 to be described below can be implemented. Further, one or more of the hardware elements of the image capturing apparatus 10 may reside on the relay device 3 or any apparatus on the communication network 100.

Hardware Configuration of Relay Device

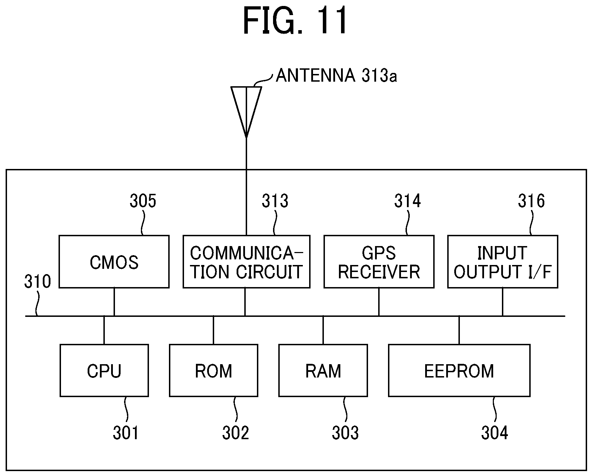

FIG. 11 is a block diagram illustrating an example hardware configuration of the relay device 3. In FIG. 11, the relay device 3 is a cradle having a wireless communication function.

As illustrated in FIG. 11, the relay device 3 includes a CPU 301, a ROM 302, a RAM 303, an electrically erasable programmable ROM (EEPROM) 304, a CMOS sensor 305, a bus line 310, a communication circuit 313, an antenna 313a for the communication circuit 313, a Global Positioning System (GPS) receiver 314, and an input/output I/F 316.

The CPU 301 controls the entire operation of the relay device 3. The ROM 302 stores an initial program loader (IPL) or any other program used for booting the CPU 301. The RAM 303 is used as a work area for the CPU 301.

The EEPROM 304 reads and writes data under the control of the CPU 301. The EEPROM 304 stores an operating system (OS) to be executed by the CPU 301, other programs, and various types of data.

The CMOS sensor 305 is a solid-state imaging element that captures an image of an object under the control of the CPU 301 to obtain image data.

The communication circuit 313 performs communication with the communication network 100 through the antenna 313a by using a wireless communication signal.

The GPS receiver 314 receives a GPS signal including location information (latitude, longitude, and altitude) of the relay device 3 via a GPS satellite or an indoor messaging system (IMES) serving as an indoor GPS.

The input/output I/F 316 is an interface circuit, such as a USB I/F, which may be electrically connected to the input/output I/F 116 of the image capturing apparatus 10. The input/output I/F 316 supports at least one of wired and wireless communications.

Examples of the bus line 310 include, but are not limited to, an address bus and a data bus, which electrically connects the above-described hardware elements.

Hardware Configurations of Communication Processing System and Communication Terminals

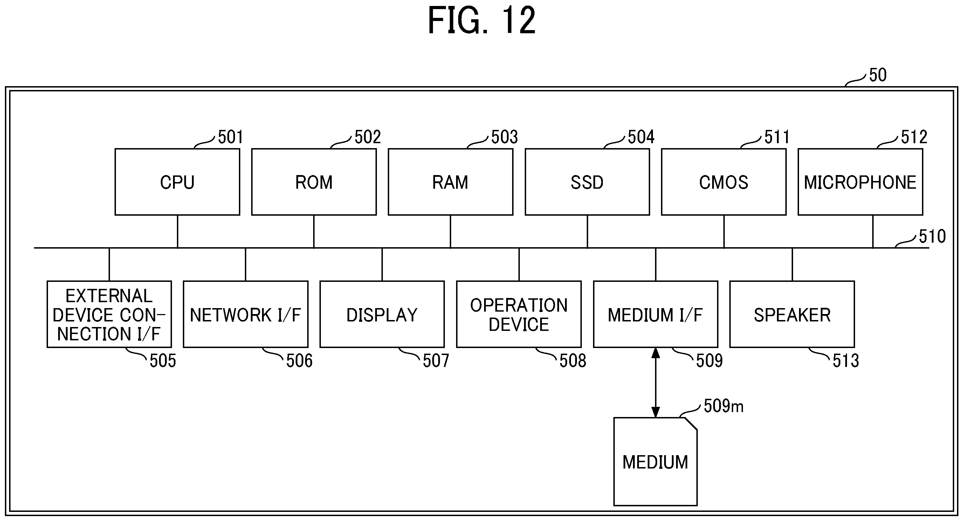

FIG. 12 is a block diagram illustrating an example hardware configuration of the communication processing system 5. The hardware configuration of each of the communication terminals 7 and 9 is similar to that of the communication processing system 5, and the description thereof will be omitted.

As illustrated in FIG. 12, the communication processing system 5 is a computer including a CPU 501, a ROM 502, a RAM 503, an SSD 504, an external device connection I/F 505, a network I/F 506, a display 507, an operation device 508, a medium I/F 509, a bus line 510, a CMOS sensor 511, and a speaker 513.

The CPU 501 controls the entire operation of the communication processing system 5. The ROM 502 stores programs such as an IPL to boot the CPU 501. The RAM 503 is used as a work area for the CPU 501.

The SSD 504 reads or writes various types of data under the control of the CPU 501. The SSD 504 does not have to be provided for the communication terminal 7 or 9, when the communication terminals 7 or 9 is a smartphone. In alternative to the SSD 504, the communication processing system 5 may include a hard disk drive (HDD). In the case of the communication terminals 7 and 9, the SSD 504 stores an operating system (OS), and application software that may be referred to as "applications". The applications include an application for managing and controlling basic functions of the communication terminals 7 and 9, and a web browser. To add the application, the communication processing system 5 downloads the application from the communication network 100 via the network I/F 506, and stores the downloaded application in the SSD 504. In the present embodiment, the processing executed by the communication terminals 7 or 9 is executed by the application or the web browser installed in the communication terminal 7 or 9.

The external device connection I/F 505 is an interface for connecting the communication processing system 5 to various external devices. Examples of the external device include, but are not limited to, a display, a speaker, a keyboard, a mouse, a USB memory, and a printer.

The network I/F 506 is an interface for performing data communication via the communication network 100.

The display 507 is one example of a display, such as a liquid crystal display or an organic electroluminescent (EL) display, which displays various images.

The operation device 508 is an example of input means operated by a user to select or execute various instructions, select a target for processing, or move a cursor being displayed. Examples of the input means include various operation keys, a power switch, a shutter button, and a touch panel.

The medium I/F 509 controls the reading or writing (storing) of data from or to a recording medium 509m such as a flash memory. Examples of the recording medium 509m include a digital versatile disc (DVD) and a Blu-ray Disc®. The medium I/F 509 reads the application software from the recording medium 509m. The application software read from the recording medium 509m by the medium I/F 509 is stored in the SSD 504.

The CMOS sensor 511 is an example of imaging means, which captures an image of an object under the control of the CPU 501 to obtain image data. The communication processing system 5 may include a CCD sensor as an alternative to the CMOS sensor 511.

The microphone 512 is a circuit that collects sounds around the microphone 512 and converts the collected sounds into audio data (audio information).

The speaker 513 is a circuit that converts an electrical signal into physical vibration to generate sounds such as music or voice.

The bus line 510 is, for example, an address bus or a data bus for electrically connecting the elements such as the CPU 501 illustrated in FIG. 12 to one another.

Functional Configurations

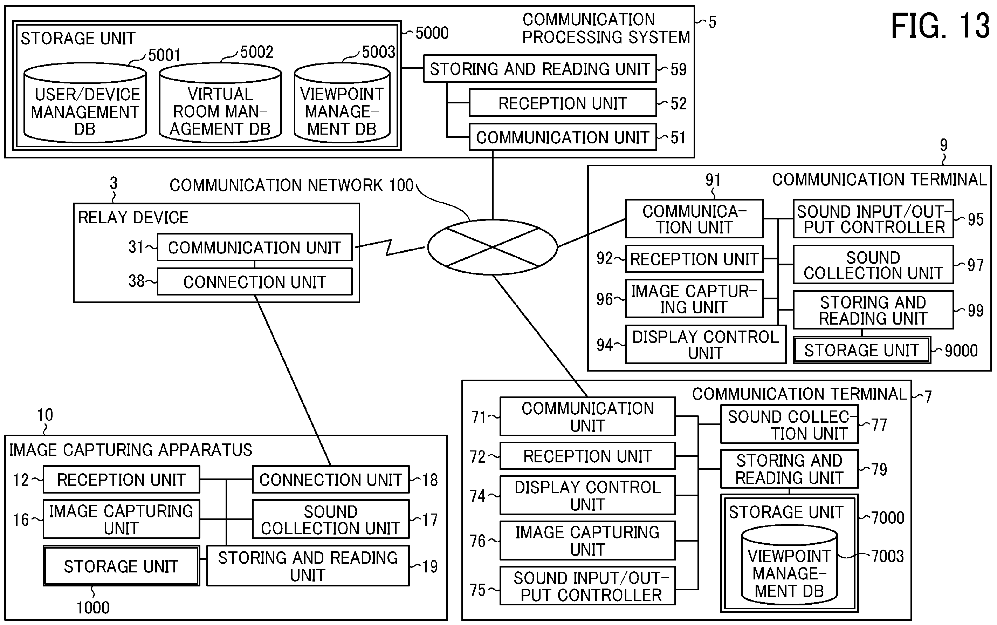

The functional configuration of the communication system 1 is described with reference to FIGs. 13 to 16.

Functional Configuration of Image Capturing Apparatus

As illustrated in FIG. 13, the image capturing apparatus 10 includes a reception unit 12, an image capturing unit 16, a sound collection unit 17, a connection unit 18, and a storing and reading unit 19. These units are functions that are implemented by or that are caused to function by operating any of the elements illustrated in FIG. 10 in cooperation with the instructions of the CPU 111 according to the control program for the image capturing apparatus 10 loaded from the SRAM 113 to the DRAM 114.

The image capturing apparatus 10 further includes a storage unit 1000. The storage unit 1000 is implemented by the ROM 112, the SRAM 113, and the DRAM 114 illustrated in FIG. 10.

Functional Units of Image Capturing Apparatus

The reception unit 12 of the image capturing apparatus 10 is implemented by the operation unit 115 operating in accordance with instructions from the CPU 111. The reception unit 12 receives an operation input from the user.

The image capturing unit 16 is implemented by the imaging unit 101, the image processor 104, and the imaging controller 105 each operating in accordance with instructions from the CPU 111. The image capturing unit 16 captures an object such as scenery to obtain a captured image.

The sound collection unit 17 is implemented by the audio processor 109 operating in accordance with instructions from the CPU 111. The sound collection unit 17 collects sounds around the image capturing apparatus 10 using the microphone 108, and outputs audio data (audio information) based on the collected sounds.

The connection unit 18 is implemented by the input/output I/F 116 operating in accordance with instructions from the CPU 111. The connection unit 18 performs data communication with the relay device 3.

The storing and reading unit 19, which is implemented by the instructions of the CPU 111, stores various data or information in the storage unit 1000 or reads out various data or information from the storage unit 1000.

Functional Configuration of Relay Device

As illustrated in FIG. 13, the relay device 3 includes a communication unit 31 and a connection unit 38. These units are functions implemented by or caused to function by operating any of the hardware elements illustrated in FIG. 11 in cooperation with the instructions of the CPU 301 according to the control program for the relay device 3 loaded from the EEPROM 304 to the RAM 303.

Functional Units of Relay Device

The communication unit 31 of the relay device 3 is implemented by the communication circuit 313 operating in accordance with instructions from the CPU 301 illustrated in FIG. 11. The communication unit 31 performs data communication with the image capturing apparatus 10 and the communication processing system 5 via the communication network 100.

The connection unit 38 is implemented by the input/output I/F 316 operating in accordance with instructions from the CPU 301. The connection unit 38 performs data communication with the image capturing apparatus 10.

Functional Configuration of Communication Processing System

The functional configuration of the communication processing system 5 is described below with reference to FIG. 13. The communication processing system 5 includes a communication unit 51, a reception unit 52, and a storing and reading unit 59. These units are functions implemented by or caused to function by operating any of the hardware elements illustrated in FIG. 12 in cooperation with the instructions of the CPU 501 according to the control program for the communication processing system 5 loaded from the SSD 504 to the RAM 503.

The communication control system 5 further includes a storage unit 5000. The storage unit 5000 is implemented by the RAM 503 and the SSD 504 illustrated in FIG. 12. The storage unit 5000 includes a user/device management database (DB) 5001, a virtual room management DB 5002, and a viewpoint management DB 5003.

User/Device Management DB

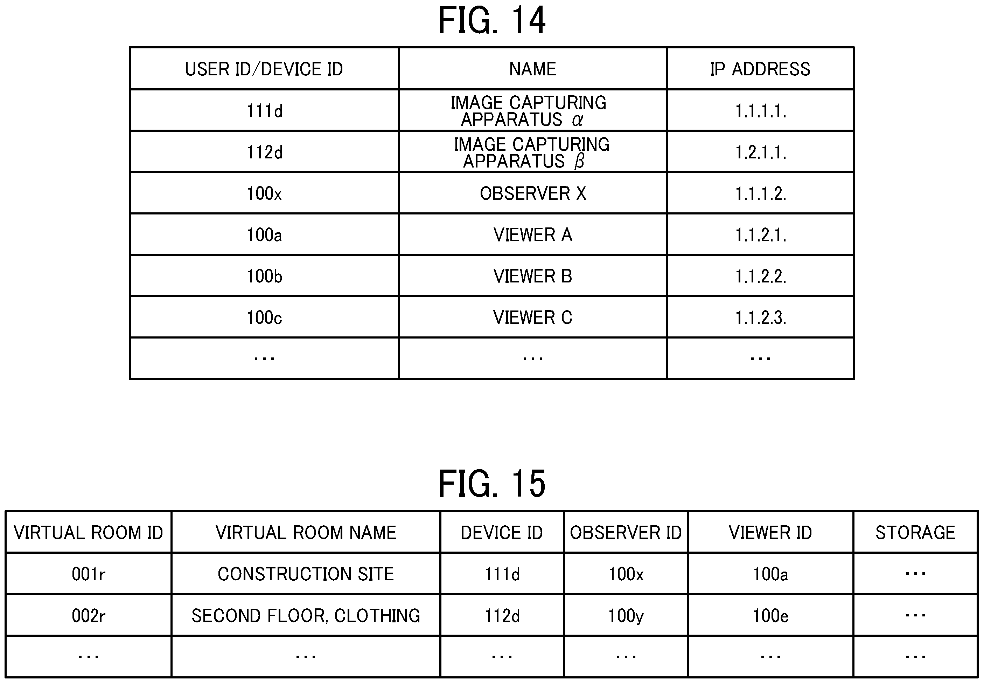

FIG. 14 illustrates an example of the user/device management DB 5001. The user/device management DB 5001 has a table format. The user/device management DB 5001 stores a user ID or a device ID, a name, and an Internet protocol (IP) address in association with each other as data items to be managed.

The user ID is an example of user identification information for identifying a user, such as the observer X and the viewer A. The device ID is an example of device identification information for identifying a device such as the image capturing apparatus 10. In FIG. 9, a head-mounted display may be used in addition to the image capturing apparatus 10. In such cases, the head-mounted display is also identified as a device.

The name is the name of the user or device.

The IP address is an example of information for specifying the address of a device such as the image capturing apparatus 10 or the communication terminal 7 or 9 used by the user.

Virtual Room Management DB

FIG. 15 illustrates an example of the virtual room management DB 5002. The virtual room management DB 5002 has a table format. The virtual room management DB 5002 stores a virtual room ID, a virtual room name, a device ID, an observer ID, a viewer ID, and storage (storage location information indicating a location where image data is stored) in association with each other, as data items to be managed.

The virtual room ID is an example of virtual room identification information for identifying a virtual room.

The virtual room name is the name of the virtual room and is determined by, for example, the user.

The device ID is synonymous with the device ID illustrated in FIG. 14 and is the ID of a device participating in the virtual room indicated by the virtual room ID in the same record.

The observer ID is an example of observer identification information for identifying the observer among users indicated by user IDs illustrated in FIG. 14. The observer ID identifies the observer participating in the virtual room indicated by the virtual room ID in the same record.

The viewer ID is an example of viewer identification information for identifying the viewer among users indicated by user IDs illustrated in FIG. 14. The viewer ID identifies the viewer participating in the virtual room indicated by the virtual room ID in the same record.

The storage is an example of storage location information, which indicates a location where the wide-view image is stored. The storage may be expressed by, for example, a URL or a file path.

Viewpoint Information Management DB

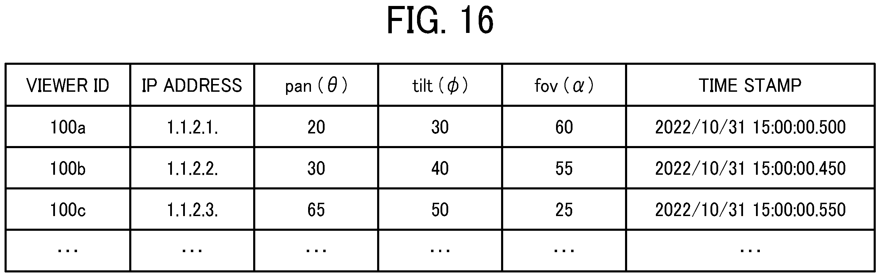

FIG. 16 illustrates an example of the viewpoint management DB 5003. The viewpoint management DB 5003 has a table format. The viewpoint management DB 5003 stores a viewer ID, an IP address, viewpoint information (pan, tilt, fov), and a time stamp in association with each other, as data items to be managed.

The viewer ID is synonymous with the viewer ID illustrated in FIG. 15.

The IP address is synonymous with the IP address illustrated in FIG. 14.

The viewpoint information (pan, tilt, fov) is viewpoint information transmitted from the communication terminal operated by the viewer identified with the viewer ID of the same record.

The time stamp indicates the time at which the viewpoint information in the same record was transmitted.

Functional Units of Communication Processing System

The functional units of the communication processing system 5 are described below with reference to FIG. 13.

The communication unit 51 of the communication processing system 5 is implemented by the network I/F 506 operating in accordance with instructions from the CPU 501 illustrated in FIG. 12. The communication unit 51 performs data communication with other devices such as the relay device 3 and the communication terminals 7 and 9 via the communication network 100.

The reception unit 52 is implemented by the operation device 508 operating in accordance with the instructions from the CPU 501. The reception unit 52 receives an operation input from the user such as a system administrator.

The storing and reading unit 59, which is implemented by the instructions of the CPU 501, stores various data or information in the storage unit 5000 or reads out various data or information from the storage unit 5000.

Functional Configuration of Communication Terminal

The functional configuration of the communication terminal 7 is described below with reference to FIG. 13. The communication terminal 7 includes a communication unit 71, a reception unit 72, a display control unit 74, a sound input/output controller 75, an image capturing unit 76, a sound collection unit 77, and a storing and reading unit 79. These units are functions implemented by or caused to function by operating any of the hardware elements illustrated in FIG. 12 in cooperation with the instructions of the CPU 501 according to the control program for the communication terminal 7 loaded from the SSD 504 to the RAM 503.

The communication terminal 7 further includes a storage unit 7000. The storage unit 7000 is implemented by the RAM 503 and the SSD 504 illustrated in FIG. 12. The storage unit 7000 further includes a viewpoint management DB 7003 in addition to the application software described with reference to FIG. 12. The viewpoint management DB 7003 stores records, each record including the viewpoint information transmitted from the communication processing system 5. The viewpoint management DB 7003 has the same data structure as that of the viewpoint management DB 7003, and the description thereof will be omitted.

Functional Units of Communication Terminal

The functional units of the communication terminal 7 are described below with reference to FIG. 13.

The communication unit 71 of the communication terminal 7 is implemented by the network I/F 506 operating in accordance with instructions from the CPU 501 illustrated in FIG. 12. The communication unit 51 performs data communication with other devices such as the communication processing system 5 via the communication network 100.

The reception unit 72 is implemented by the operation device 508 operating in accordance with the instructions from the CPU 501. The reception unit 72 receives an operation input from the user such as the observer X.

The display control unit 74 is implemented by the instructions of the CPU 501. The display control unit 74 controls the display 507 of the communication terminal 7 or an external display connected to the external device connection I/F 505 to display various images.

The sound input/output controller 75 is implemented by the instructions of the CPU 501 of the communication terminal 7. The sound input/output controller 75 performs control to collect sounds from the microphone 512 of the communication terminal 7 or an external microphone connected to the external device connection I/F 505. Further, the sound input/output controller 75 controls the speaker 513 of the communication terminal 7 or an external speaker connected to the external device connection I/F 505 to output sounds.

The image capturing unit 76 is implemented by the instructions from the CPU 501 of the communication terminal 7 to the CMOS 511 of the communication terminal 7, and instructions to perform image processing by the CPU 501 of the communication terminal 7. The image capturing unit 76 captures an object such as the observer X and the scenery to obtain a captured image.

The sound collection unit 77 is implemented by the instructions from the CPU 501 to the microphone 512 of the communication terminal 7 to process, and processing of sounds (voices) by the CPU 501 of the communication terminal 7. The sound collection unit 77 collects the sounds from the surroundings of the communication terminal 7 and outputs audio data (audio information).

The storing and reading unit 79, which is implemented by the instructions of the CPU 501, stores various data or information in the storage unit 7000 or reads out various data or information from the storage unit 7000.

Functional Configuration of Communication Terminal

The functional configuration of the communication terminal 9 is described below with reference to FIG. 13. The communication terminal 9 includes a communication unit 91, a reception unit 92, a display control unit 94, a sound input/output controller 95, an image capturing unit 96, a sound collection unit 97, and a storing and reading unit 99. These units are functions implemented by or caused to function by operating any of the hardware elements illustrated in FIG. 12 in cooperation with the instructions of the CPU 501 according to the control program for the communication terminal 9 loaded from the SSD 504 to the RAM 503.

The communication terminal 9 further includes a storage unit 9000. The storage unit 9000 is implemented by the RAM 503 and the SSD 504 illustrated in FIG. 12.

The communication unit 91 of the communication terminal 9 is implemented by the network I/F 506 operating in accordance with the instructions from the CPU 501 illustrated in FIG. 12. The communication unit 91 performs data communication with other devices such as the communication processing system 5 via the communication network 100.

The reception unit 92 is implemented by the operation device 508 operating in accordance with the instructions from the CPU 501. The reception unit 72 receives an operation input from the user such as the viewer A.

The display control unit 94 is implemented by the instructions of the CPU 501. The display control unit 94 controls the display 507 of the communication terminal 9 or an external display connected to the external device connection I/F 505 to display various images.

The sound input/output controller 95, which is implemented by the instructions of the CPU 501, controls the speaker 513 of the communication terminal 9 or an external speaker connected to the external device connection I/F 505 to output sounds.

The image capturing unit 96 is implemented by the instructions from the CPU 501 of the communication terminal 9 to the CMOS 511 of the communication terminal 9, and instructions to perform image processing by the CPU 501 of the communication terminal 9. The image capturing unit 96 captures an object such as the viewer A and the scenery to obtain a captured image.

The sound collection unit 97 is implemented by the instructions from the CPU 501 of the communication terminal 9 to the microphone 512 of the communication terminal 9 and processing of sound (voice) by the CPU 501 of the communication terminal 9. The sound collection unit 97 collects the sounds from the surroundings of the communication terminal 9 and outputs audio data (audio information).

The storing and reading unit 99, which is implemented by the instructions of the CPU 501, stores various data or information in the storage unit 9000 or reads out various data or information from the storage unit 9000.

Processes and Operations

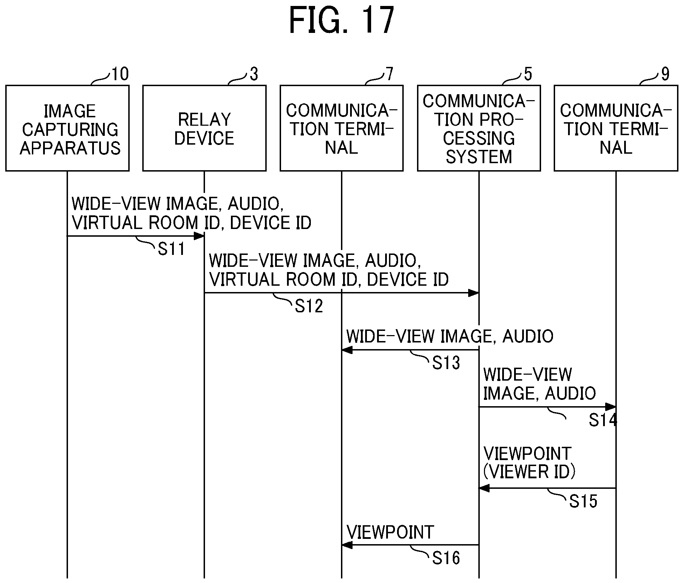

Example processes or operations are described below with reference to FIGs. 17 to 28. The following processes are performed after the image capturing apparatus 10 and the communication terminals 7 and 9 have entered the same virtual room.

Transmitting and Receiving Process of Wide-View Image and Audio Information by Communication System

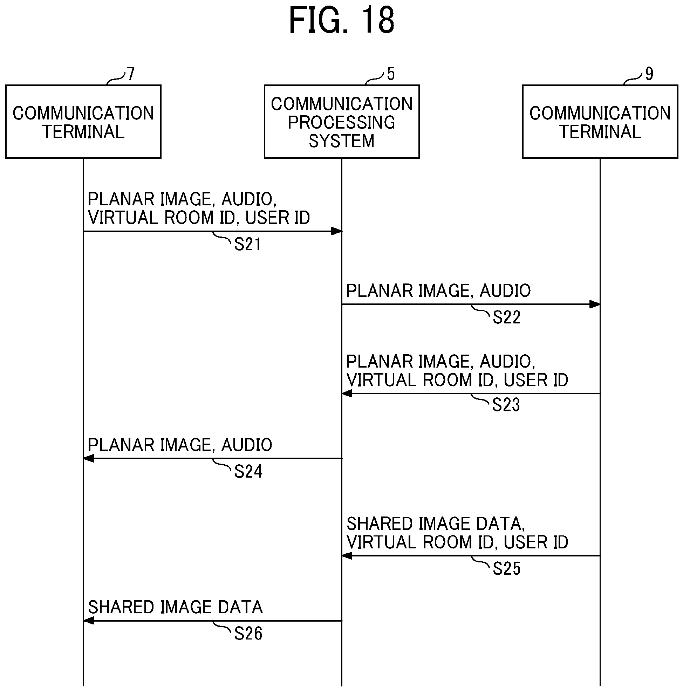

An example transmitting and receiving process of a wide-view image and audio information, performed by the communication system 1, is described with reference to FIGs. 17 and 18. In describing the processes in FIGs. 17 and 18, "001r", "100x", and "100a" are used as the virtual room ID, the observer ID, and the viewer ID illustrated in FIG. 15, respectively, but the IDs are not limited to these examples.

Transmission and Reception of Wide-View Image and Audio Information

An example transmitting and receiving process of a wide-view image and audio information, performed by the communication system 1, is described with reference to FIG. 17. FIG. 17 is a sequence diagram illustrating a communicating process of a wide-view image and viewpoint information, performed by the communication system 1. The processes S11 to S16 of FIG. 17 are repeatedly performed, for example, about 30 times or 60 times per second.

At S11, the image capturing unit 16 of the image capturing apparatuses 10 captures a spherical image of the construction site S to obtain a wide-view image. The connection unit 18 transmits the wide-view image to the relay device 3. At substantially the same time, at the image capturing apparatus 10, the sound collection unit 17 collects sounds at the construction site S to obtain audio information, and the connection unit 18 transmits the audio information to the relay device 3. In this example, the connection unit 18 also transmits, to the relay device 3, a virtual room ID for identifying the virtual room in which the image capturing apparatus 10 participates and a device ID for identifying the image capturing apparatus 10. The connection unit 38 of the relay device 3 acquires the wide-view image, the audio information, the virtual room ID, and the device ID.

At S12, the communication unit 31 of the relay apparatus 3 transmits various information acquired by the connection unit 38 at S11 to the communication processing system 5 via the communication network 100. The various that is transmitted to the communication processing system 5 at S12 includes the wide-view image, the audio information, the virtual room ID, and the device ID. At the communication processing system 5, the communication unit 51 receives various information including the wide-view image, the audio information, the virtual room ID, and the device ID.

At S13, the storing and reading unit 59 of the communication processing system 5 searches the virtual room management DB 5002 using the virtual room ID "001r" received at S12 to read the observer ID "100x" of the observer X and the viewer ID "100a" of the viewer A, which are associated with the virtual room ID "001r". The observer X and the viewer A each participates in the same virtual room where the image capturing apparatus 10 with the device ID "111d" is present. The storing and reading unit 59 further searches the user/device management DB 5001 using the observer ID and the viewer ID having been read, to read the IP address of the communication terminal 7 of the observer X and the IP address of the communication terminal 9 of the viewer A. The communication unit 51 transmits the wide-view image and the audio information received at S12 to the communication terminal 7, using the IP address of the communication terminal 7. The communication unit 71 of the communication terminal 7 receives the wide-view image and the audio information.

At S14, the communication unit 51 of the communication processing system 5 transmits the wide-view image and the audio information, received at S12, to the communication terminal 9 using the IP address of the communication terminal 9. The communication unit 91 of the communication terminal 9 receives the wide-view image and the audio information.

Transmission and Reception of Viewpoint Information

At S15, the display control unit 94 of the communication terminal 9 displays a predetermined-area image indicating a predetermined area of the wide-view image that is received at S14. The sound input/output controller 95 of the communication terminal 9 outputs sounds based on the audio information received at S14. As described above referring to FIG. 6A, the predetermined area T, which is previously set, is initially displayed. In response to the reception unit 92 receiving operation on a screen by the viewer A, the display control unit 94 changes the predetermined area on the screen, from the predetermined area T (see FIG. 6A) that is previously set to the predetermined area T' (see FIG. 6C), to display a predetermined-area image (see FIG. 6D) of the predetermined-area T' in which an object of interest to the viewer A is displayed. The object of interest may be a product or a building. The communication unit 91 of the communication terminal 9 transmits the viewpoint information indicating the predetermined area T' in the wide-view image to the communication processing system 5. The viewpoint information includes the viewer ID for identifying the viewer A as a transmission source.

The communication unit 51 of the communication processing system 5 receives the viewpoint information. The storing and reading unit 59 stores, in the viewpoint management DB 5003, the viewpoint information (pan, tilt, fov) and the viewer ID, which are received at S15, in association with each other as one record. The storing and reading unit 59 further stores time information (time stamp) indicating the time when the viewpoint information was received at S17, in association with the viewer ID of the viewer A, which is the user ID managed in the user/device management DB 5001, as the same record.

At S16, the storing and reading unit 59 of the communication processing system 5 reads various information such as the viewpoint information, which is stored as one record in the viewpoint information management DB 5003 at S15. The communication unit 51 transmits such various information including the viewpoint information to the communication terminal 7. The communication unit 71 of the communication terminal 7 receives various information including the viewpoint information. Specifically, the storing and reading unit 59 searches the virtual room management DB 5002 illustrated in FIG. 15, using the virtual room ID "001r" obtained at S12, and reads the corresponding observer ID "100x". The storing and reading unit 59 further searches the user/device management DB 5001 illustrated in FIG. 14 using the observer ID "100x" to read the corresponding IP address. The communication unit 51 then transmits the viewpoint information to the communication terminal 7 operated by the observer X, among the communication terminals operated by the observer X and the viewer A, using the IP address that is obtained.

Transmission and Reception of Planar Image and Audio Information

FIG. 18 is a sequence diagram illustrating an example communication process of a planar image and shared image data, performed by the communication system 1.

At S21, the image capturing unit 76 of the communication terminal 7 captures an image of the observer X to obtain a planar image. The communication unit 71 transmits the planar image to the communication processing system 5. At substantially the same time, at the communication terminal 7, the sound collection unit 77 collects sounds around the communication terminal 7 to obtain audio information. The communication unit 71 transmits the audio information to the communication processing system 5. In this example, the communication unit 71 further transmits a virtual room ID for identifying the virtual room in which the communication terminal 7 participates, and the user ID (observer ID) for identifying the observer X. The communication unit 51 of the communication processing system 5 receives the planar image, the audio information, the virtual room ID, and the user ID.

At S22, the storing and reading unit 59 of the communication processing system 5 searches the virtual room management DB 5002 illustrated in FIG. 15 using the virtual room ID received at S21, and reads the viewer ID "100a" of the viewer A, who is participating in the same virtual room as the virtual room where the observer X is participating. The storing and reading unit 59 further searches the user/device management DB 5001 using the viewer ID having been read, to read the IP address of the communication terminal 9 of the viewer A. The communication unit 51 transmits the planar image and the audio information received at S21 to the communication terminal 9, using the IP address of the communication terminal 9. The communication unit 91 of the communication terminal 9 receives the planar image and the audio information. The display control unit 94 causes the display 507 of the communication terminal 9 to display an image in which the observer X is displayed. The sound input/output controller 95 controls the speaker 513 of the communication terminal 9 to output sounds generated based on the audio information.

At S23, the image capturing unit 96 of the communication terminal 9 captures an image of the viewer A to obtain a planar image. The communication unit 91 transmits the planar image to the communication processing system 5. At substantially the same time, at the communication terminal 9, the sound collection unit 97 collects sounds around the communication terminal 9 to obtain audio information. The communication unit 91 transmits the audio information to the communication processing system 5. In this example, the communication unit 91 further transmits a virtual room ID for identifying the virtual room in which the communication terminal 9 participates and the user ID (viewer ID) for identifying the viewer A. The communication unit 51 of the communication processing system 5 receives the planar image, the audio information, the virtual room ID, and the user ID.

At S24, the storing and reading unit 59 of the communication processing system 5 searches the virtual room management DB 5002 illustrated in FIG. 15 using the virtual room ID "001r" received at S23, and reads the observer ID "100x" of the observer X, who is participating in the same virtual room as the virtual room where the viewer A is participating. The storing and reading unit 59 further searches the user/device management DB 5001 illustrated in FIG. 14 using the observer ID having been read, to read the IP address of the communication terminal 7 of the observer X. The communication unit 51 transmits the planar image and the audio information received at S23 to the communication terminal 7, using the IP address of the communication terminal 7. The communication unit 71 of the communication terminal 7 receives the planar image and the audio information.

The display control unit 74 causes the display 507 of the communication terminal 7 to display an image in which the viewer A is displayed. The sound input/output controller 75 controls the speaker 513 of the communication terminal 7 to output sounds generated based on the audio information.

Transmission and Reception of Shared Screen Data

At S25, the display control unit 94 of the communication terminal 9 further displays an image (different from the planar image) based on shared screen data, on the display 507 of the communication terminal 9. The communication unit 91 of the communication terminal 9 transmits the shared screen data to the communication processing system 5. In this example, the communication unit 91 further transmits, to the communication processing system 5, a virtual room ID for identifying the virtual room in which the communication terminal 9 participates and the user ID (viewer ID) for identifying the viewer A. The communication unit 51 of the communication processing system 5 receives the shared screen data, the virtual room ID, and the user ID from the communication terminal 9.

At S26, the storing and reading unit 59 of the communication processing system 5 searches the virtual room management DB 5002 illustrated in FIG. 15 using the virtual room ID "001r" received at S25, and reads the observer ID "100x" of the observer X, who is participating in the same virtual room as the virtual room where the viewer A is participating. The storing and reading unit 59 further searches the user/device management DB 5001 illustrated in FIG. 14 using the observer ID having been read, to read the IP address of the communication terminal 7 of the observer X. The communication unit 51 transmits the planar image and the audio information received at S25 to the communication terminal 7, using the IP address of the communication terminal 7. The communication unit 71 of the communication terminal 7 receives the shared screen data. The display control unit 74 causes the display 507 of the communication terminal 7 to display an image based on the shared screen data.

Processing to Display by Communication Terminal

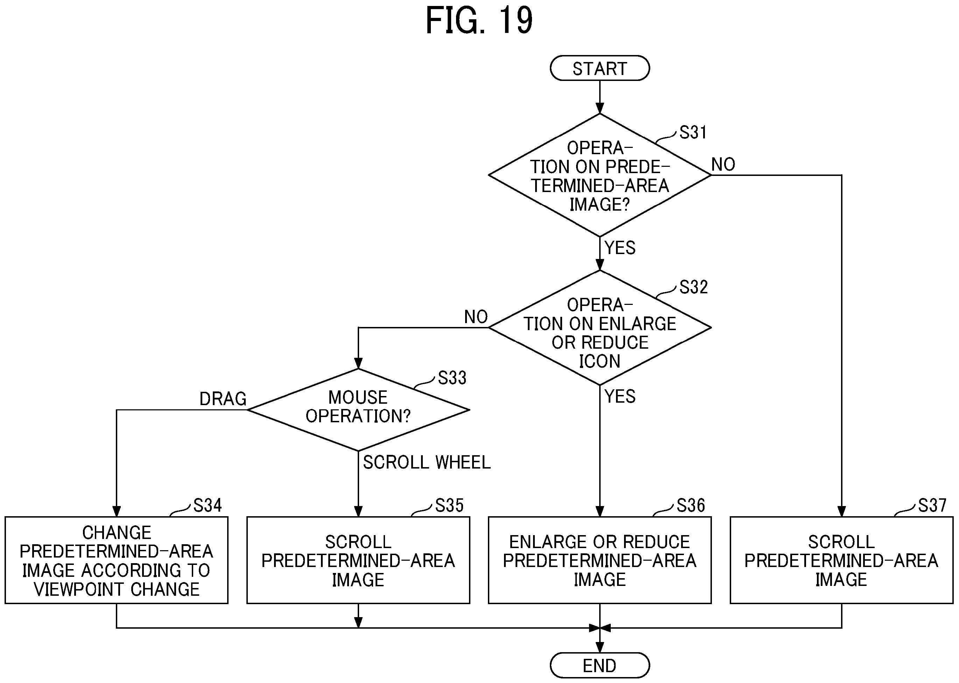

An example displaying process, which is performed by the communication terminal 9, is described below with reference to FIGs. 19 to 22.

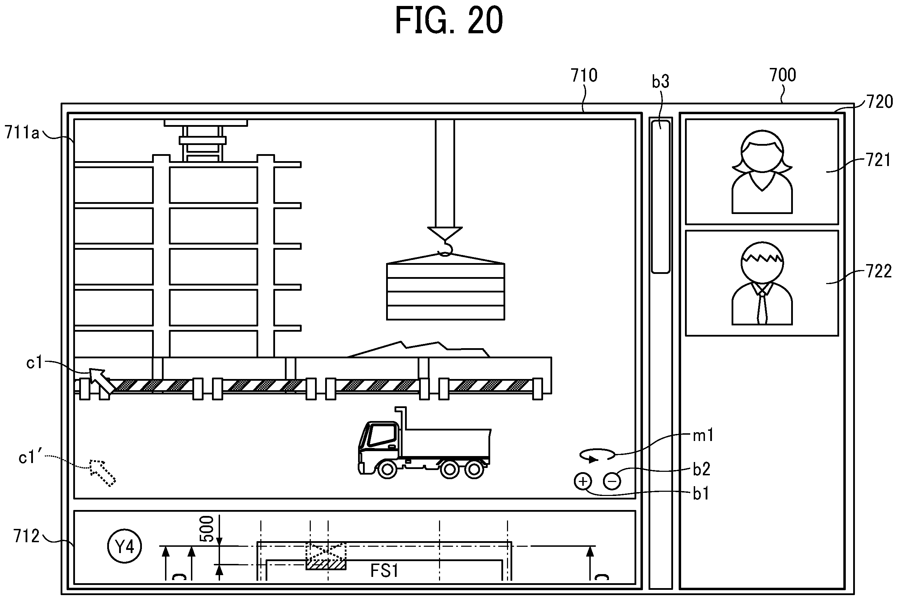

FIG. 19 is a flowchart illustrating a displaying process according to mouse operation on the predetermined-area image or outside the predetermined-area image, in the example case where the communication terminal 9 is a PC. FIG. 20 is a diagram illustrating a home screen displayed by the application installed in the communication terminal 9.

In the following description, the viewer A operates the mouse to move a cursor c1 to designate or select a specific portion on a screen 700, which is displayed by the application on the display 507 of the communication terminal 9. The mouse is an example of an operation device, and other examples of the operation device include other types of pointing devices and a touch pad provided for a notebook PC. The operation device may be built in the communication terminal 9. Alternatively, the operation device may be an external device that performs wired or wireless communication with the external device connection I/F 506 of the communication terminal 9.

Through the processes in FIG. 17 and FIG. 18, the display control unit 94 displays the screen 700 as illustrated in FIG. 20, which serves as the home screen, on the display 507 of the communication terminal 9.

The screen 700 includes a main display area 710 on the left, and a sub display area 720 on the right. The display area of the main display area 710 is larger than that of the sub display area 720. For example, the horizontal width of the main display area 710 is about 70% of the horizontal width of the screen 700, and the horizontal width of the sub display area 720 is about 20% of the horizontal width of the screen 700. The remaining 10% of the horizontal width of the screen 700 corresponds to the horizontal width of the scroll bar b3 and the margin. The main display area 710 and the sub display area 720 may be displayed on separate screens. In the present disclosure, the "scroll" means any operation to display characters or figures on a computer screen, while moving up and down or right and left on the screen to view a different part of the characters or figures.

The main display area 710 displays a predetermined-area image 711a, which is a predetermined area (viewable area) to be displayed by the display control unit 94, of the wide-view image transmitted from the image capturing apparatus 10 via the communication processing system 5. The predetermined-area image 711a has a mark m1 at its lower right portion. The mark m1 indicates that a virtual viewpoint is movable to change the predetermined-area image 711a. The predetermined-area image 711a further includes an enlarge icon b1 and a reduce icon b2 at the lower right portion. The enlarge icon b1, when pressed, causes the predetermined-area image 711a to be displayed larger by zooming in. The reduce icon b2, when pressed, causes the predetermined-area image 711a to be displayed smaller by zooming out. The enlarge icon b1 and the reduce icon b2 are examples of an operation reception area.

The main display area 710 further includes an image 712, which is generated based on the shared screen data, below the predetermined-area image 711a. The image 712 may be referred to as the shared screen data image 712. In FIG. 20, only a part of the shared screen data image 712 is displayed in the main display area 710, as the display area of the main display area 710 is limited.

On the right of the main display area 710, a scroll bar b3 movable in the vertical direction is displayed. The scroll bar b3, when moved, causes the image in the main display area 710 to scroll. When the scroll bar b3 is moved by the viewer A, the display control unit 94 moves (scrolls) the images in the main display area 710 up and down. The images include, for example, the predetermined-area image 711a and the shared screen data image 712.

The display control unit 94 may display the predetermined-area image 711a and the shared screen data image 712, side by side, in the horizontal direction instead of the vertical direction. In such case, the scroll bar b3 is displayed along the horizontal direction of the screen 700 to be movable right and left.

Further, the sub display area 720 displays a planar image 721 of the viewer A, and a planar image 722 of the observer X. The planar image 721 is captured by the image capturing unit 96 of the communication terminal 9. The planar image 722 is transmitted from the communication terminal 7 via the communication processing system 5 at S21 and S22.

FIG. 19 illustrates an example displaying process, which is performed by the display control unit 94 according to a user operation performed by the viewer A on the screen 700. In the following, it is assumed that the user operation corresponds to operation by the viewer A using the mouse, which may be referred to as the "mouse operation".

At S31, the reception unit 92 determines whether the mouse operation by the viewer A is an operation performed on the predetermined-area image (in this example, the predetermined-area image 711a) using the cursor c1.

When the reception unit 92 determines that the mouse operation is an operation on the predetermined-area image at S31 (YES at S31), at S32, the reception unit 92 further determines whether the mouse operation is an operation on the enlarge icon b1 or the reduce icon b2.

When the reception unit 92 determines that the user operation is none of the operation on the enlarge icon b1 and the reduce icon b2 (S32: NO), at S33, the reception unit 92 determines whether the mouse operation is drag or scroll wheel. In this example, the drag and the scroll wheel are both performed using the same mouse. In the case of using two operation devices, such as two mouses, at the same time, it is assumed that the reception unit 92 can distinguish these two operation devices. The reception unit 92 may recognize the drag performed by one operation device as "drag", while recognizing the drag performed by the other operation device as "scroll wheel".

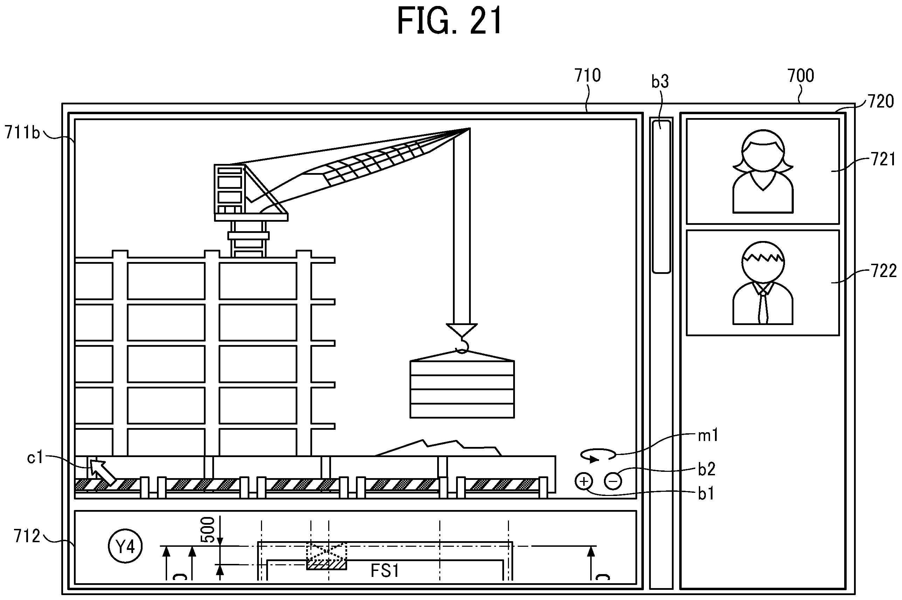

When the reception unit 92 determines that the mouse operation is the drag ("drag" at S33), at S34, the display control unit 94 changes the predetermined-area image according to the change in virtual viewpoint with respect to the wide-view image. For example, in FIG. 20, when the viewer A moves the cursor c1 to the location c1' on the predetermined-area image 711a using the mouse, the reception unit 92 detects the movement of the cursor c1. The display control unit 94 changes a predetermined area to be displayed, so as to change from the predetermined-area image 711a to a predetermined-area image 711b as illustrated in FIG. 21. The predetermined-area image 711b is an image corresponding to the upper portion of the predetermined area, represent by the predetermined-area image 711a, in the same wide-view image (the portion closer to the north pole of the wide-view image).

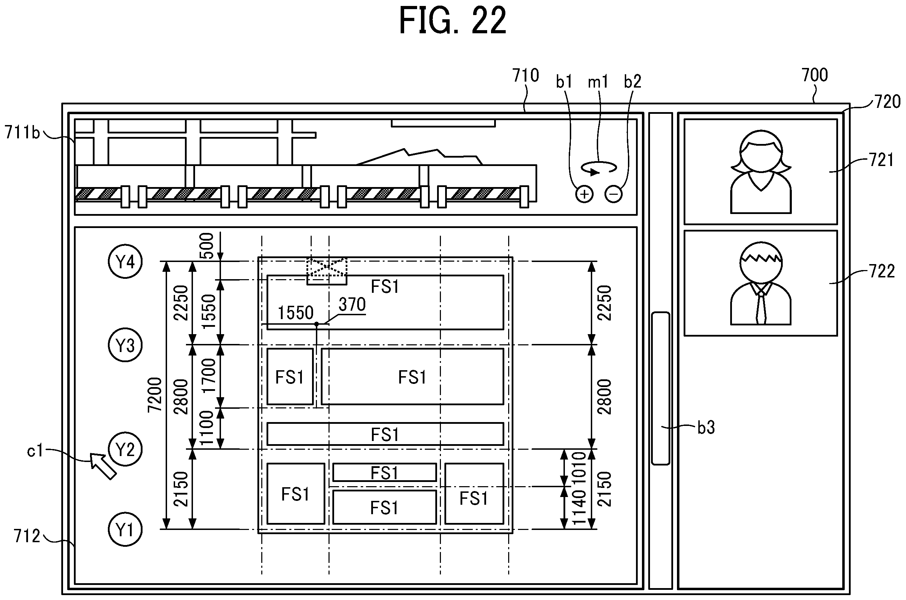

When the reception unit 92 determines that the mouse operation is the scroll wheel ("scroll wheel" at S33), at S35, the display control unit 94 scrolls the images (the predetermined-area image 711b and the shared screen data image 712) in the main display area 710. For example, in FIG. 21, when the viewer A operates the mouse to rotate the scroll wheel, the reception unit 92 detects the rotation of the scroll wheel. The display control unit 94 then scrolls the predetermined-area image 711b and the shared screen data image 712 in the main display area 710 as illustrated in FIG. 22. The display control unit 94 further moves the scroll bar b3 in accordance with the rotation of the scroll wheel. As illustrated in FIG. 22, the display control unit 94 moves the scroll bar b3 to a location, which corresponds to a location to which the predetermined-area image 711b and the shared screen data image 712 are moved according to the rotation of the scroll wheel.

In a case where only the predetermined-area image 711a or 711b is being displayed in the display area 710, the display control unit 94 may move (scroll) at least the predetermined-area image 711a or 711b without moving (scrolling) the planar image 721 of the viewer A and the planar image 722 of the observer X in the sub display area 720.

When the reception unit 92 determines that the mouse operation is an operation on the enlarge icon b1 or the reduce icon b2 (YES at S32), the operation proceeds to S36. At S36, the display control unit 94 zooms in the predetermined-area image 711a when the enlarge icon b1 is pressed, and zooms out the predetermined-area image 711a when the reduce icon b2 is pressed. The display control unit 94 determines whether the operation is enlarging or reducing, in prior to determining whether the operation is drag or scroll wheel. In other words, the display control unit 94 gives priority to pressing of the enlarge icon b1 or the reduce icon b2 in the predetermined-area image over the mouse operation such as the drag or the scroll wheel in the predetermined-area image, to perform processing to enlarge or reduce the image rather than changing the virtual viewpoint or scrolling. In this embodiment, the processing to enlarge or reduce the image is an example of third processing different than first processing of changing the virtual viewpoint or second processing of scrolling. Specifically, in response to selection of a particular icon on the predetermined-area image, the display control unit 94 performs the third processing as defined by the selected icon.

When the reception unit 92 determines that the mouse operation is not performed on the predetermined-area image (NO at S31), at S37, the display control unit 94 scrolls the predetermined-area image according to the details of the operation. For example, in FIG. 21, when the viewer A clicks the left key of the mouse to move the cursor c1 on the scroll bar b3, the reception unit 92 detects the movement of the scroll bar b3. The display control unit 94 scrolls the predetermined-area image 711b and the shared screen data image 712 in the main display area 710 as illustrated in FIG. 22.

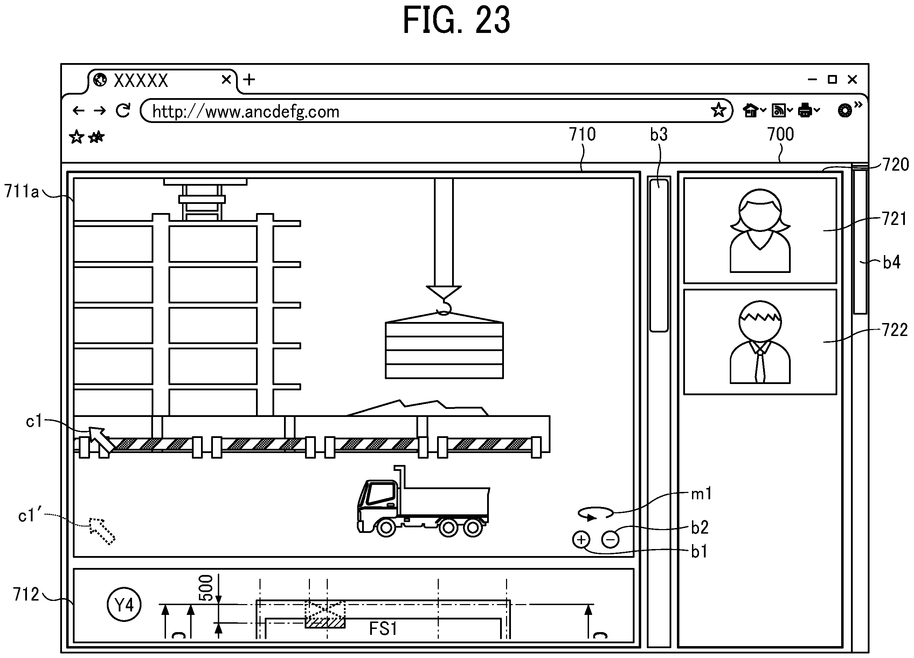

Although FIGs. 20 to 22 illustrate screens displayed by the application installed on the communication terminal 9, the screens may be displayed by a WEB browser installed on the communication terminal 9 as illustrated in FIGs. 23 to 25. The screens of FIGs. 23 to 25 correspond to the screens of FIGs. 20 to 22, respectively.

No matter whether the application is used or the web browser is used, the display control units 74 and 94 perform the processes in S31 to S37, and the processes in S51 to S56 described below.

In FIGs. 23 to 25, the elements denoted by the same reference numerals as those in FIGs. 20 to 22 perform substantially the same functions. In FIGs. 23 to 25, the sub display area 720 further includes a scroll bar b4 on its right. The scroll bar b4 is movable in the vertical direction to scroll the images in the sub display area 720. When the scroll bar b4 is moved by the viewer A, the display control unit 94 moves the planar image 721 of the viewer A and the planar image 722 of the viewer X in the sub display area 720. When the scroll bar b4 is moved, the display control unit 94 may move the images in the main display area 710 in addition to the images in the sub display area 720. The scroll bar b4 may be displayed on the screens illustrated in FIGs. 20 to 22.

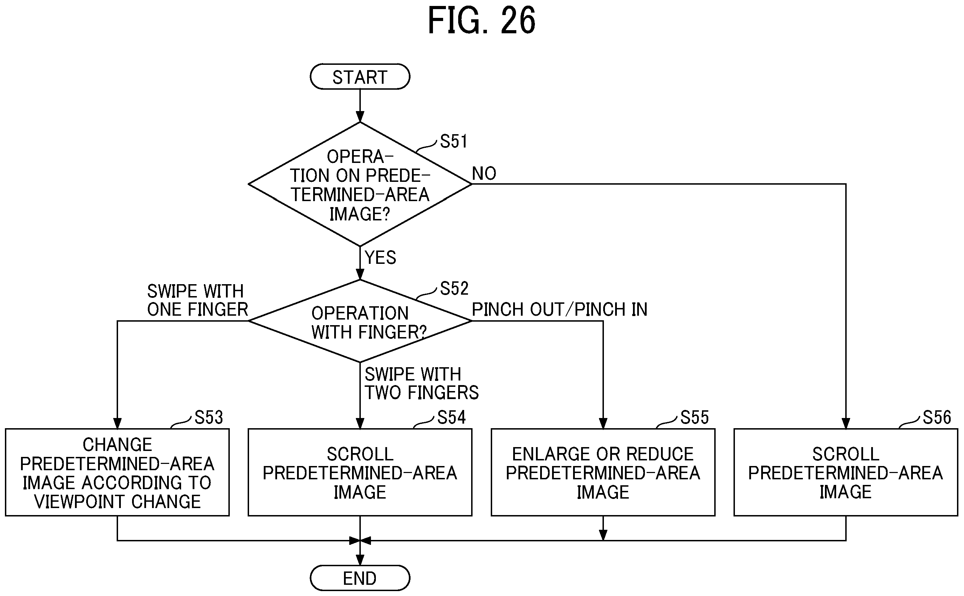

Another example displaying process, which is performed by the communication terminal 9, is described below with reference to FIG. 26. In the following, it is assumed that the communication terminal 9 is a portable terminal such as a smartphone or a tablet terminal.

In the case where the communication terminal 9 is the portable terminal, since the size of the display area is smaller than that of the PC, the enlarge icon b1 and the reduce icon b2 are not displayed. The communication terminal 9 detects the pinch-out gesture to enlarge the image size, and the pinch-in gesture to reduce the image size.

FIG. 26 is a flowchart illustrating a displaying process according to operation, using the finger or fingers of the operator, on the predetermined-area image or outside the predetermined-area image, in the example case where the communication terminal 9 is the portable terminal such as the smartphone or the tablet terminal. The portable terminal has a touch panel, which detects contact from a part of the human body such as the finger or fingers. The reception unit 92 receives various user operations based on the user contact with the touch panel. In the following, it is assumed that the user operation corresponds to operation by the viewer A using the finger or fingers, which may be referred to as the "finger operation". In this example case where the communication terminal 9 has a relatively small display area, the display control unit 94 may not display the sub display area 720 illustrated in any one of FIGs. 20 to 25.

At S51, the reception unit 92 determines whether the finger operation by the viewer A is an operation on the predetermined-area image (in this example, the predetermined-area image 711a).

When the reception unit 92 determines that the finger operation is an operation on the predetermined-area image at S51 (Yes at S51), at S52, the reception unit 92 determines whether the finger operation is a swipe with one finger, a swipe with two fingers, or a pinch-out or pinch-in using two fingers.

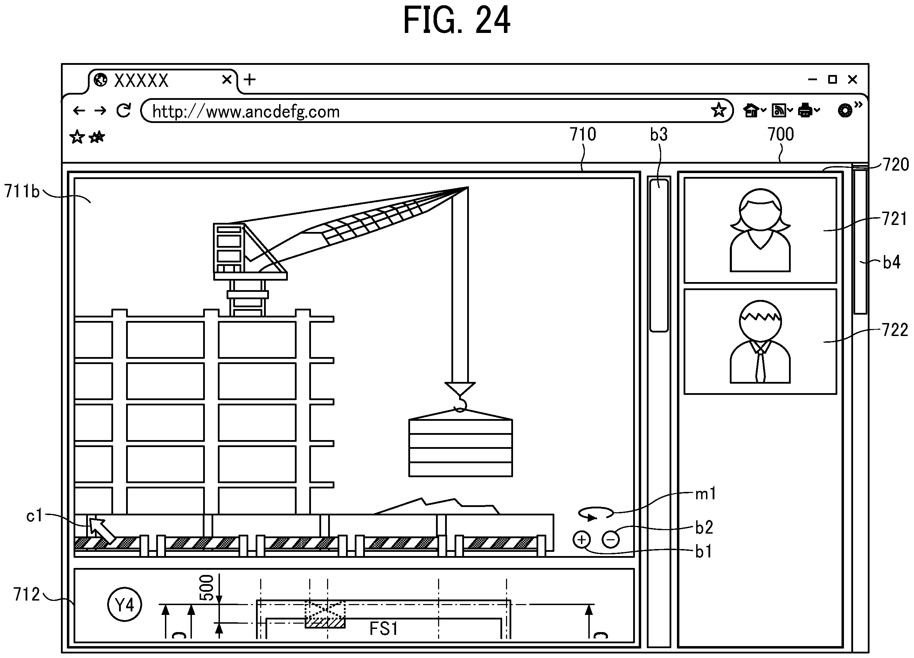

When the reception unit 92 determines that the finger operation is a swipe with one finger (SWIPE WITH ONE FINGER at S52), at S53, the display control unit 94 changes the predetermined-area image according to the change in the virtual viewpoint with respect to the wide-view image. For example, in FIG. 20 or 23, when the viewer A touches the predetermined-area image 711a with one finger and swipes the touched area downward, the reception unit 92 detects the movement of the one finger in a similar manner as the case where the cursor c1 is moved to the location cl'. The display control unit 94 changes a predetermined area to be displayed, such that the predetermined-area image 711a is changed to the predetermined-area image 711b as illustrated in FIG. 21 or 24. The predetermined-area image 711b is an image representing the upper portion of the predetermined area, represented by the predetermined-area image 711a, in the same wide-view image (the portion closer to the north pole of the wide-view image).

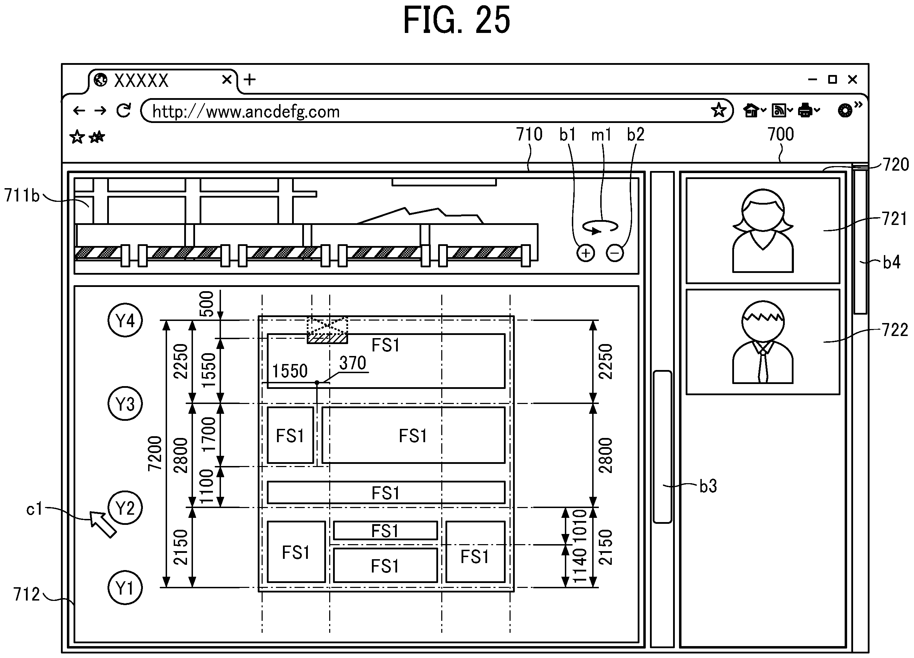

When the reception unit 92 determines that the finger operation is a swipe operation with two fingers (SWIPE WITH TWO FINGERS at S52), at S54, the display control unit 94 scrolls the images (the predetermined-area image 711a and the shared screen data image 712) in the main display area 710. For example, in FIG. 21 or 24, when the viewer A touches the predetermined-area image 711b with two fingers and swipes the touched area upward, the reception unit 92 detects the movement of the two fingers. The display control unit 94 scrolls the predetermined-area image 711b and the shared screen data image 712 in the main display area 710 as illustrated in FIG. 22 or 25. The display control unit 94 moves the scroll bar b3 in accordance with the movement of the two fingers. As illustrated in FIG. 22 or 25, the display control unit 94 moves the scroll bar b3 to a location, which corresponds to a location to which the predetermined-area image 711b and the shared screen data image 712 are moved according to the movement of the two fingers.

When the reception unit 92 determines that the operation is the pinch-out or pinch-in with two fingers on the touch panel (PINCH-OUT/PINCH-IN at S52), the operation proceeds to S55. At S55, the display control unit 94 zooms in the predetermined-area image when the operation is the pinch-out, and zooms out the predetermined-area image when the operation is the pinch-in.

When the reception unit 92 determines that the finger operation is not performed on the predetermined-area image (NO at S51), at S56, the display control unit 94 scrolls the predetermined-area image according to the details of the operation. For example, in FIG. 21 or 24, when the viewer A touches the scroll bar b3 with one finger and swipes the touched area downward, the reception unit 92 detects the movement of the one finger. The display control unit 94 scrolls the predetermined-area image 711b and the shared screen data image 712 in the main display area 710 as illustrated in FIG. 22 or 25.

Displaying Process by Communication Terminal

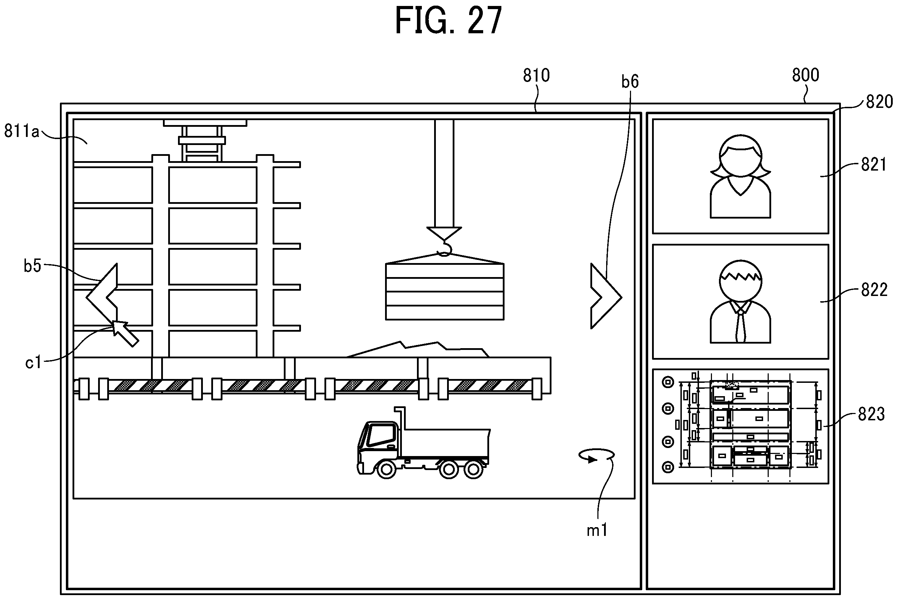

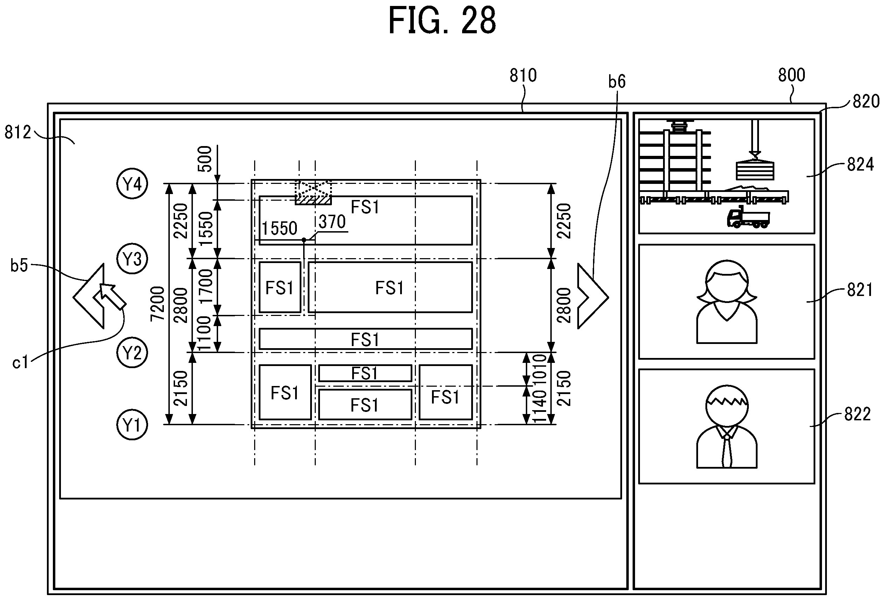

Another example displaying process, which is performed by the communication terminal 9, is described below with reference to FIGs. 27 and 28.

FIG. 27 is a diagram illustrating a home screen displayed by the display terminal, which may be the communication terminal 7 or 9. FIG. 28 is a diagram illustrating a state where the display control unit 94 switches the predetermined-area image and the screen shared data image according to selection of an arrow icon in the predetermined-area image of the home screen illustrated in FIG. 27.

First, through the processes in FIG. 17 and FIG. 18, the display control unit 94 displays the screen 800 as illustrated in FIG. 27, which serves as the home screen, on the display 507 of the communication terminal 9.

The screen 800 includes a main display area 810 on the left, and a sub display area 820 on the right. The display area of the main display area 810 is larger than that of the sub display area 820. The main display area 810 and the sub display area 820 may be displayed on separate screens.

The main display area 810 displays a predetermined-area image 811a, which is a predetermined area (viewable area) to be displayed by the display control unit 94, of the wide-view image transmitted from the image capturing apparatus 10 via the communication processing system 5. The predetermined-area image 811a has a mark m1 at its lower right portion. The mark m1 indicates that a virtual viewpoint is movable to change the predetermined-area image 811a. The predetermined-area image 811a can be changed by moving the virtual viewpoint, similarly to the predetermined-area image 711a illustrated in FIG. 20.

The predetermined-area image 811a further includes an enlarge icon b1 and a reduce icon b2 at the lower right portion. The enlarge icon b1, when pressed, causes the predetermined-area image 811a to be displayed larger by zooming in. The reduce icon b2, when pressed, causes the predetermined-area image 811a to be displayed smaller by zooming out. The predetermined-area image 811a can be displayed larger or smaller, similarly to the predetermined-area image 711a illustrated in FIG. 20.

In FIG. 27, unlike the main display area 710 illustrated in FIG. 20, the shared screen data image is not displayed below the predetermined-area image 811a in the main display area 810. Further, unlike the screen 700 illustrated in FIG. 20, the scroll bar for scrolling the image in the main display area 810 is not displayed on the right of the main display area 810.

Further, the sub display area 820 displays a planar image 821 of the viewer A, and a planar image 822 of the observer X, in this order from the top to the bottom of the screen. The planar image 821 is captured by the image capturing unit 96 of the communication terminal 9. The planar image 822 is transmitted from the communication terminal 7 via the communication processing system 5 at S21 and S22.

Unlike the screen illustrated in FIG. 20, the sub display area 820 further includes a thumbnail 823 of the shared screen data image at its bottom. The thumbnail 823 is the thumbnail of the shared screen data image 712 illustrated in FIG. 22.

On the predetermined-area image 811a illustrated in FIG. 27, an arrow icon b5 pointing to the left and an arrow icon b6 pointing to the right are displayed. The arrow icon b5, when pressed, switches the image being displayed in the main display area 810, with one of the images being displayed in the sub display area 820.

For example, the predetermined-area image 811a, the thumbnail 823 of the shared screen data image, the planar image 822 of the viewer X, and the planar image 821 of the viewer A are displayed one by one in the main display area 810, in this order, in response to pressing of the arrow icon b5.

For example, when the reception unit 92 detects that the arrow icon b5 of FIG. 27 is pressed by the viewer A, the display control unit 94 switches between the predetermined-area image 811a and the thumbnail 823 of the shared screen data image, such that the predetermined-area image 811a is displayed in the sub display area 820 and the thumbnail 823 is displayed in the main display area 810 as illustrated in FIG. 28. When the thumbnail 823 is moved from the sub display area 820 to the main display area 810, the shared screen data image 812, which is larger in size, is displayed as illustrated in FIG. 28 in alternative to the thumbnail 823 as illustrated in FIG. 27. On the other hand, a thumbnail 824 of the predetermined-area image 811a is displayed in the sub display area 820 as illustrated in FIG. 28.

Similarly, the arrow icon b6, when pressed, switches the image being displayed in the main display area 810, with one of the images being displayed in the sub display area 820. In this example, the images are selected in the reverse order to the order for the arrow icon b5. Specifically, the predetermined-area image 811a, the planar image 821 of the viewer A, the planar image 822 of the observer X, and the thumbnail 823 of the shared screen data image are displayed one by one in the main display area 810, in this order, in response to pressing of the arrow icon b6. The order of selecting the respective images may be different than the above-described example. For example, the order of selecting the images may be switched between the arrow icon b5 and the arrow icon b6.

When the reception unit 92 detects that the arrow icon b5 or the arrow icon b6 is pressed, the display control unit 94 switches between the predetermined-area image 811a being displayed in the main display area 810 and one of the images being displayed in the sub display area 820. The arrow icon b5 and the arrow icon b6 are examples of the operation reception area. Further, switching the images to be displayed in the main display area and the sub display area is an example of third processing, which is different than the first processing of changing the virtual viewpoint and the second processing of scrolling. Specifically, in response to selection of a particular icon on the predetermined-area image, the display control unit 94 performs the third processing as defined by the selected icon.

As described above, the communication terminal 9 changes the predetermined-area image (for example, the predetermined-area image 711a), which is a viewable area of the wide-view image for display, according to an operation of the viewer A on the wide-view image. The display control unit 94 performs, according to a first operation performed on the predetermined-area image 711a, the first processing of changing from the predetermined-area image 711a to another predetermined-area image, which represents another area of the wide-view image as indicated by the change in virtual viewpoint with respect to the wide-view image. The display control unit 94 performs the second processing of scrolling the predetermined-area image 711a according to a second operation performed on the predetermined-area image 711a. With this configuration, the operation for changing the virtual viewpoint and the operation for scrolling do not conflict with each other.

Examples of the first operation performed by the operator, such as the viewer A, include dragging with the mouse, and swiping with one finger while contacting the touch panel.

Examples of the second operation performed by the operator, such as the viewer A, include operating a scroll wheel, and swiping with two fingers while contacting the touch panel.

The first operation and the second operation may be different from the above-described examples, as long as the first operation and the second operation are distinguishable from each other. For example, the first operation may be swiping with two fingers, and the second operation may be swiping with one finger. Further, the number of fingers made in contact with the touch panel of the communication terminal 9 may be any number as long as the number of fingers is different between the first operation and the second operation. In another example, the first operation may be swiping with two fingers, and the second operation may be swiping with three fingers. Furthermore, the first operation or the second operation may be performed using a part of the human body other than the finger.

For example, the first operation and the second operation may be previously associated with the first processing and the second processing, respectively.

Specific applications of the illustrated embodiments will be described below.

There are increasing cases where construction sites are monitored remotely for supervision and assistance, by two-way communication of multimedia, such as video (including audio) and materials to be shared via screen, using a 360-degree camera or a wearable camera. There are still various issues in performing remote monitoring with a quality equal to or higher than the quality in performing monitoring on sites.

In the background remote communication system, when multiple images including captured images and an image to be shared are displayed on one screen, the images are reduced in size and displayed in the respective windows on the screen. In the case of remotely monitoring the construction site, the viewer A such as a supervisor views the captured images side by side while viewing materials such as the blueprint by screen sharing, and gives instructions to the construction site from a remote place. While the viewer A wants to see both the materials and the captured images in large size, it has been difficult to see both images in large size due to the limitation in display size.

The viewer A may view one image in larger size by displaying that image entirely on the display. When the viewer A wants to check multiple images to make a comparison, switching from one image to another image for display could be cumbersome. This is especially true for the case where the displayed images include a wide-view image captured with the 360-degree camera. When the viewer A wants to see another portion of the displayed image, the viewer A drags or swipes the displayed image to change the virtual viewpoint in the wide-view image. This operation of dragging or swiping may conflict with the operation of dragging or swiping to scroll the displayed image. In other words, it has been difficult to distinguish between these two instructions.

In the illustrative embodiments, the first operation for changing the virtual viewpoint in the wide-view image to change the predetermined-area image, and the second operation for scrolling the predetermined-area image are made distinguishable from each other. This can prevent the first operation and second operation from conflicting with each other. For example, the viewer A can easily give instructions to the construction site by referring to the shared screen data image 712 while changing the virtual viewpoint of the predetermined-area image 711a.

The above-described embodiments are illustrative and do not limit the present invention. For example, any one of the above-described operations may be performed in various other ways, for example, in an order different from the one described above.

The functional units of the information processing system 5, the image capturing apparatus 10, and the communication terminals 7 and 9, illustrated in FIG. 13, are exemplary, and the divisions or the names of the functional units are not limited to the illustrative embodiments. The processing units performed by any one of the information processing system 5, the image capturing apparatus 10, and the communication terminals 7 and 9 may be divided into more units of processing in accordance with the content of the processing. Further, the division may be made such that each unit of processing includes more processing operations.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided for the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The illustrated devices, apparatuses, or terminals are only illustrative of one of several computing environments for implementing the embodiments disclosed herein. In some embodiments, the information processing system 5 includes multiple computing devices such as a server cluster. The multiple computing devices are configured to communicate with each other over any type of communication link, including a network, a shared memory, etc. to collectively perform the processes disclosed herein.

Further, the illustrated elements of the communication processing system 5 can be combined into a single server apparatus, or divided between multiple machines in combinations.

The illustrated programs may be stored in a non-transitory recording medium such as a DVD-ROM, and distributed in the form of a program product to domestic or foreign users.

The number of the CPU 111, 301, and 501 as processing circuitry may be one or more.

## Claims

1. A display terminal (7, 9) comprising:

a display (507) to display a screen including a predetermined-area image representing a viewable area of a wide-view image; and
a display control unit (74, 94) configured to control the display, wherein,
in response to detection of a first operation on the predetermined-area image, the display control unit (74, 94) performs first processing of displaying another predetermined-area image representing another viewable area of the wide-view image, said another viewable area reflecting a change in virtual viewpoint to the wide-view image, and
in response to detection of a second operation on the predetermined-area image, the second operation being different than the first operation, the display control unit (74, 94) performs second processing of scrolling the predetermined-area image in the screen.

2. The display terminal (7, 9) of claim 1, further comprising:

a connection interface (505) to connect with an operation device,
wherein the display control unit (74, 94) is configured to receive the first operation and the second operation from the operation device.

3. The display terminal (7, 9) of claim 2, wherein

the operation device is a mouse,
the first operation is a drag performed on the predetermined-area image, and
the second operation is a scroll wheel performed on the predetermined-area image.

4. The display terminal (7, 9) of claim 1, wherein the display control unit (74, 94) is further configured to

cause the display to display a scroll bar outside the predetermined-area image, the scroll bar causing, when operated, the predetermined-area image to scroll, and
move the scroll bar to a location that corresponds to a location to which the predetermined-area image is scrolled according to the second operation.

4. The display terminal (7, 9) of claim 1, further comprising:
a touch panel configured to detect the first operation and the second operation based on a contact made to the touch panel by an operator.

5. The display terminal (7, 9) of claim 5, wherein

the first operation is operation to touch by the operator with one finger, and
the second operation is operation to touch by the operator with two fingers.

6. The display terminal (7, 9) of claim 6, wherein

the first operation is swiping with the one finger, and
the second operation is swiping with the two fingers.

7. The display terminal (7, 9) of claim 1, wherein

the display control unit (74, 94) is further configured to cause the display (507) to display one or more icons in the predetermined-area image, the one or more icons for performing third processing, the third processing being different than the first processing and the second processing, and

in response to selection of one of the one or more icons, the display control unit (74, 94) is configured to perform the third processing defined by the selected icon, without performing the first processing or the second processing.

**8.** The display terminal (7, 9) of claim 8, wherein the third processing is enlarging a size of the predetermined-area image or reducing the size of the predetermined-area image.

**9.** The display terminal (7, 9) of claim 8, wherein

the screen includes a display area, and
the third processing is switching an image to be displayed in the display area, the image being one of the predetermined-area image or another image.

**10.** The display terminal (7, 9) of claim 10, further comprising:

a communication unit (71, 91) configured to communicate with a counterpart communication terminal (7, 9),
wherein said another image is an image of data to be shared with the counterpart communication terminal.

**11.** A system comprising:

a display to display a screen including a predetermined-area image representing a viewable area of a wide-view image; and
a communication terminal (7, 9) communicably connected with the display, including:

a display control unit (74, 94) configured to control the display, wherein,
in response to detection of a first operation on the predetermined-area image, the display control unit (74, 94) performs first processing of displaying another predetermined-area image representing another viewable area of the wide-view image, said another viewable area reflecting a change in virtual viewpoint to the wide-view image, and
in response to detection of a second operation on the predetermined-area image, the second operation being different than the first operation, the display control unit (74, 94) performs second processing of scrolling the predetermined-area image in the screen.

**12.** A method of displaying, comprising:

displaying, on a display, a screen including a predetermined-area image representing a viewable area of a wide-view image;
in response to detection of a first operation on the predetermined-area image, performing first processing of displaying another predetermined-area image representing another viewable area of the wide-view image, said another viewable area reflecting a change in virtual viewpoint to the wide-view image; and
in response to detection of a second operation on the predetermined-area image, the second operation being different than the first operation, performing second processing of scrolling the predetermined-area image in the screen.

**14.** A carrier means carrying computer readable code for controlling a computer system to carry out the method of claim 13.

# FIG. 1A

103b — — 103a

10

# FIG. 1B

103b

115

10

# FIG. 1C

103b — — 103a

10

EP 4 530 811 A1

# FIG. 2

## FIG. 3A

HEMISPHERICAL IMAGE (FRONT)

## FIG. 3B

HEMISPHERICAL IMAGE (BACK)

## FIG. 3C

CAPTURED IMAGE (EQUIRECTANGULAR PROJECTION IMAGE EC)

# FIG. 4A

EQUIRECTANGULAR PROJECTION IMAGE EC

# FIG. 4B

SPHERICAL IMAGE CE

# FIG. 5

VIRTUAL
CAMERA IC

VIRTUAL
CAMERA IC

SPHERICAL
IMAGE CE
(SPHERE CS)

PREDETERMINED-AREA IMAGE Q
(PREDETERMINED AREA T)

SPHERICAL IMAGE CE
(SPHERE CS)

PREDETERMINED-AREA IMAGE Q
(PREDETERMINED AREA T)

(FRONT)

(SIDE)

PREDETERMINED-AREA IMAGE Q
(PREDETERMINED AREA T)

SPHERICAL IMAGE CE
(SPHERE CS)

VIRTUAL
CAMERA IC

(TOP)

EP 4 530 811 A1

## FIG. 6A

VIRTUAL
CAMERA IC   SPHERE CS

PREDETERMINED-AREA IMAGE Q
(PREDETERMINED AREA T)

## FIG. 6B

## FIG. 6C

VIRTUAL
CAMERA IC        SPHERE CS

PREDETERMINED-AREA IMAGE Q'
(PREDETERMINED AREA T')

## FIG. 6D

# FIG. 7

# FIG. 8

# FIG. 9

COMMUNICATION PROCESSING SYSTEM 5

100

COMMUNICATION NETWORK

CONSTRUCTION SITE S

IMAGE CAPTURING APPARATUS 10

COMMUNICATION TERMINAL 7

COMMUNICATION TERMINAL 9

RELAY DEVICE 3

OBSERVER X

VIEWER A

EP 4 530 811 A1

# FIG. 10

EP 4 530 811 A1

IMAGE CAPTURING APPARATUS 10

IMAGING UNIT 101

LENS 102a

IMAGING ELEMENT (1) 103a

LENS 102b

IMAGING ELEMENT (2) 103b

IMAGE PROCESSOR 104

IMAGING CONTROLLER 105

MICROPHONE 108

AUDIO PROCESSOR 109

ACCELERATION SENSOR 120

NETWORK I/F 121

110

CPU 111

ROM 112

SRAM 113

DRAM 114

OPERATION UNIT 115

INPUT OUTPUT I/F 116

SHORT-RANGE COMMUNICATION CIRCUIT 117

ELECTRONIC COMPASS 118

GYRO SENSOR 119

ANTENNA 117a

# FIG. 11

ANTENNA 313a

| 305 | 313 | 314 | 316 |
|------|------|------|------|
| CMOS | COMMUNICA-TION CIRCUIT | GPS RECEIVER | INPUT OUTPUT I/F |

310

| CPU | ROM | RAM | EEPROM |
|------|------|------|------|
| 301 | 302 | 303 | 304 |

## FIG. 12

CPU 501   ROM 502   RAM 503   SSD 504   CMOS 511   MICROPHONE 512

510

EXTERNAL DEVICE CON-NECTION I/F 505   NETWORK I/F 506   DISPLAY 507   OPERATION DEVICE 508   MEDIUM I/F 509   SPEAKER 513

MEDIUM 509m

50

EP 4 530 811 A1

FIG. 13

## FIG. 14

| USER ID/DEVICE ID | NAME | IP ADDRESS |
|---|---|---|
| 111d | IMAGE CAPTURING APPARATUS $\alpha$ | 1.1.1.1. |
| 112d | IMAGE CAPTURING APPARATUS $\beta$ | 1.2.1.1. |
| 100x | OBSERVER X | 1.1.1.2. |
| 100a | VIEWER A | 1.1.2.1. |
| 100b | VIEWER B | 1.1.2.2. |
| 100c | VIEWER C | 1.1.2.3. |
| ... | ... | ... |

## FIG. 15

| VIRTUAL ROOM ID | VIRTUAL ROOM NAME | DEVICE ID | OBSERVER ID | VIEWER ID | STORAGE |
|---|---|---|---|---|---|
| 001r | CONSTRUCTION SITE | 111d | 100x | 100a | ... |
| 002r | SECOND FLOOR, CLOTHING | 112d | 100y | 100e | ... |
| ... | ... | ... | ... | ... | ... |

# FIG. 16

| VIEWER ID | IP ADDRESS | pan ($\theta$) | tilt ($\phi$) | fov ($\alpha$) | TIME STAMP |
|---|---|---|---|---|---|
| 100a | 1.1.2.1. | 20 | 30 | 60 | 2022/10/31 15:00:00.500 |
| 100b | 1.1.2.2. | 30 | 40 | 55 | 2022/10/31 15:00:00.450 |
| 100c | 1.1.2.3. | 65 | 50 | 25 | 2022/10/31 15:00:00.550 |
| ... | ... | ... | ... | ... | ... |

EP 4 530 811 A1

# FIG. 17

# FIG. 18

COMMUNICATION TERMINAL 7

COMMUNICATION PROCESSING SYSTEM 5

COMMUNICATION TERMINAL 9

PLANAR IMAGE, AUDIO, VIRTUAL ROOM ID, USER ID
S21

PLANAR IMAGE, AUDIO
S22

PLANAR IMAGE, AUDIO, VIRTUAL ROOM ID, USER ID
S23

PLANAR IMAGE, AUDIO
S24

SHARED IMAGE DATA, VIRTUAL ROOM ID, USER ID
S25

SHARED IMAGE DATA
S26

# FIG. 19

START

S31 · OPERA-TION ON PREDE-TERMINED-AREA IMAGE? — NO

YES

S32 · OPERA-TION ON ENLARGE OR REDUCE ICON — NO

YES

S33 · MOUSE OPERATION? — DRAG / SCROLL WHEEL

S34 · CHANGE PREDETERMINED-AREA IMAGE ACCORDING TO VIEWPOINT CHANGE

S35 · SCROLL PREDETERMINED-AREA IMAGE

S36 · ENLARGE OR REDUCE PREDETERMINED-AREA IMAGE

S37 · SCROLL PREDETERMINED-AREA IMAGE

END

# FIG. 20

EP 4 530 811 A1

# FIG. 21

EP 4 530 811 A1

# FIG. 22

## FIG. 23

# FIG. 24

EP 4 530 811 A1

# FIG. 25

EP 4 530 811 A1

# FIG. 26

START

S51 OPERATION ON PREDE-TERMINED-AREA IMAGE? — NO

YES

S52 OPERATION WITH FINGER?

SWIPE WITH ONE FINGER — PINCH OUT/PINCH IN

SWIPE WITH TWO FINGERS

S53 CHANGE PREDETERMINED-AREA IMAGE ACCORDING TO VIEWPOINT CHANGE

S54 SCROLL PREDETERMINED-AREA IMAGE

S55 ENLARGE OR REDUCE PREDETERMINED-AREA IMAGE

S56 SCROLL PREDETERMINED-AREA IMAGE

END

EP 4 530 811 A1

# FIG. 27

EP 4 530 811 A1

# FIG. 28

Europäisches
Patentamt

European
Patent Office

Office européen
des brevets

# EUROPEAN SEARCH REPORT

Application Number

EP 24 20 2726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/308630 A1 (DELGADO OMAR J [US]) 28 September 2023 (2023-09-28) * paragraph [0064] - paragraph [0231]; figures 1-5B * ----- | 1-14 | INV. G06F3/0485 G06F3/04845 G06F3/04883 |
| X | US 2021/232307 A1 (KATO YUJI [JP]) 29 July 2021 (2021-07-29) * paragraph [0018] - paragraph [0070]; figures 1-8 * ----- | 1-14 | |

**TECHNICAL FIELDS SEARCHED (IPC)**

G06F

The present search report has been drawn up for all claims

| Place of search | Date of completion of the search | Examiner |
|---|---|---|
| Berlin | 12 February 2025 | Reise, Berit |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 2726

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| US 2023308630 A1 | 28-09-2023 | NONE | | |
| US 2021232307 A1 | 29-07-2021 | AU | 2018336341 A1 | 10-10-2019 |
| | | BR | 112019019526 A2 | 22-04-2020 |
| | | CA | 3072999 A1 | 28-03-2019 |
| | | CN | 110720086 A | 21-01-2020 |
| | | EP | 3605295 A1 | 05-02-2020 |
| | | JP | 6419278 B1 | 07-11-2018 |
| | | JP | 2019056978 A | 11-04-2019 |
| | | KR | 20200002025 A | 07-01-2020 |
| | | KR | 20210006005 A | 15-01-2021 |
| | | RU | 2720356 C1 | 29-04-2020 |
| | | US | 2020012421 A1 | 09-01-2020 |
| | | US | 2021232307 A1 | 29-07-2021 |
| | | WO | 2019059020 A1 | 28-03-2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022074159 A